# EUROPEAN PATENT APPLICATION

(11) **EP 4 557 757 A1**
(43) Date of publication of application: **21.05.2025**
(21) Application number: 24212774.4
(22) Date of filing: 13.11.2024
(51) Int. Cl.: H04N 23/63

(54) **SYSTEM AND METHOD FOR INDICATING RECORDING STATUS OF CAMERA**

(30) Priority: 14.11.2023 US 202363598821 P; 12.11.2024 US 202418945213
(71) Applicant: Tyco Fire & Security GmbH, 8212 Neuhausen am Rheinfall (CH)
(72) Inventor: PARIPALLY, Gopal, North Andover, MA (US); OUELLETTE, Jason M., Leominster, MA (US); LAWRENCE, Pete, Lisburn (GB)
(74) Representative: Meissner Bolte Nürnberg

(57) **Abstract**

A method and apparatus for indicating as recording status of a camera include determining a current recording status of the camera. The aspects include providing, in a vicinity of the camera responsive to the current recording status of the camera, a human-perceptible recording status indication for the camera.

## Description

### CLAIM OF PRIORITY

The present application claims priority to U.S. Patent Application No. 18/945,213, filed on November 12, 2024, and U.S. Provisional Application No. 63/598,821, filed on November 14, 2023, and hereby incorporated herein by reference in their entireties.

### TECHNICAL FIELD

Aspects of the present disclosure relate generally to camera and/or video recording systems, and, more particularly, to systems and methods for indicating the recording status of camera.

### BACKGROUND

Cameras have become a pervasive technology. People now encounter camera in all aspects of life including within stores and outside at parks and many other places. However, people are often intimidated by the fact that they are being recorded. Even for non-criminal behavior, people may not feel comfortable being themselves and carefree when they know a camera is recording them.

### SUMMARY

The following presents a simplified summary of one or more aspects to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

According to aspects of the present invention, a computer-implemented method is provided. The method includes determining a current recording status of a camera. The method further includes providing, in a vicinity of the camera responsive to the current recording status of the camera, a human-perceptible recording status indication for the camera.

According to yet other aspects, a computer program product configured to indicate a recording status of a camera is provided. The computer program product includes one or more non-transitory computer-readable media, having instructions stored thereon that when executed by one or more processors cause the one or more processors, individually or in combination, to perform a method. The method includes determining a current recording status of the camera. The method further includes providing, in a vicinity of the camera responsive to the current recording status of the camera, a human-perceptible recording status indication for the camera.

According to other aspects of the present invention, a system for indicating a recording status of a camera is provided. The system includes one or more memory devices having program code stored thereon, one or more processors, operatively coupled to the one or more memory devices, for running the program code, individually or in combination, to determine a current recording status of the camera, and provide, in a vicinity of the camera responsive to the current recording status of the camera, a human-perceptible recording status indication for the camera.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which.
**FIG. 1** illustrates a block diagram of an example of a computer environment, in accordance with example aspects of this disclosure.
**FIG. 2** illustrates a block diagram of an example environment, in accordance with example aspects of the present disclosure.
**FIG. 3** illustrates a block diagram of another example environment, in accordance with example aspects of the present disclosure.
**FIG. 4** illustrates a block diagram of yet another example environment, in accordance with example aspects of the present disclosure.
**FIG. 5** illustrates a block diagram of still another example environment, in accordance with example aspects of the present disclosure.
**FIG. 6** illustrates a block diagram of still yet another example environment, in accordance with example aspects of the present disclosure.
**FIG. 7** illustrates a block diagram of a further example environment, in accordance with example aspects of the present disclosure.
**FIG. 8** illustrates a block diagram of a yet further example environment, in accordance with example aspects of the present disclosure.
**FIG. 9** illustrates a block diagram of a still yet further example environment, in accordance with example aspects of the present disclosure.
**FIG. 10** illustrates an example human-perceptible recording status indication model, in accordance with example aspects of the present disclosure.
**FIGS. 11-20** illustrate a flowchart of an example of a method for providing a human-perceptible camera recording status indication, in accordance with example aspects of the present disclosure.

### DETAILED DESCRIPTION

Aspects of the present disclosure are directed to systems and methods for indicating the recording status of cameras in the vicinity of a human so as to not intimidate the human. As used herein, the term "vicinity" refers to someone within the view of one or more cameras, or someone who can see or hear a recording status indication, or someone within a threshold distance of the one or more cameras (e.g., where the threshold distance can be any configurable distance such as based on a location of the camera and where a person may be able to see or hear a recording status indication, or a field of view of the camera). The recording status indicates if the camera is recording (e.g., recording ON), or if the camera is not recording (e.g., recording OFF).

Aspects of the present disclosure are directed to the notion that people do not like to be recorded and want to know if and when they are being recorded.

Aspects of the present disclosure are directed to indicating on or near a camera, whether or not the camera is recording. In this way, a human, such as but not limited to a passersby, proximate to the camera will be able to know whether or not a camera is recording them.

Aspects of the present disclosure may be directed to cases where the indication shows that the camera is off so that passersby can feel at ease and comfortable in their surroundings without worrying about being recorded. Other aspects of the present disclosure may be directed to cases where the indication shows that the camera is on so that passersby know they are being recorded and will likely act a certain way (e.g., in a lawful manner).

People are concerned with unnecessarily sharing their personal identifying information (PII) with others. Aspects of the present disclosure provide an indication to the human when the PII (e.g., facial image data, gate, etc.) is being shared and when it is not. In this way, the human can be provided with knowledge of the recording state of cameras in their proximity.

Aspects of the present disclosure can utilize existing hardware on a camera and/or new hardware on a camera and/or other devices. Existing hardware on a camera can include, e.g., infrared light emitting diodes (IR LEDs), speakers, etc.. New hardware on a camera can include, e.g., a forward facing display, specially purposed LEDs for indicating a recording state, etc. Other devices can include separate (i.e., non-integrated) speakers, displays, and so forth proximate to the cameras for indicating the recording status of the cameras.

For example, in an aspect, one or more visible or infrared LED's on a camera may be flashed or kept on in order to enable a human proximate to the camera to know that the camera is recording. The visible LEDs can be observed by the human, and IR LEDs can be observed by a device of the human such as a smartphone. In an aspect, the LEDs are marked on the camera as being for recording. The LEDs may be marked by text temporarily affixed (e.g., a sticker) or permanently affixed (molded in the camera bodies) on the cameras may be shown on a separate display device.

As a further example, many cameras have an output port that can drive a relay(s). Separate devices such as separate speakers, and separate monitors, and so forth can be controlled via the relay(s) responsive a signal from the output port corresponding to the recording state of the camera. A separate device, as used herein, means not integrated into the camera itself. A separate device may include a device that is proximate to the camera, but not part of the camera itself, such as not being at least partially encapsulated within the camera body.

As another example, in an aspect, one or more speakers on or proximate to a camera may make a sound in order to indicate that the camera is recording.

As a further example, a display (such as, but not limited to, a light emitting diode (LED) message board) near the camera, whether dedicated for this purpose of having another primary function (e.g., display at airport, bus terminal, railroad, and so forth indicating schedule and/or other information), may indicate a camera recording status. Further to that example, a display may present a message such as "recording in progress" in order to indicate to a human that the camera in their vicinity and likely in their view is recording the human. At other times, the display may present a message such as "not recording" in order to indicate to the human that the camera in their vicinity and likely in their view is not recording the human.

Aspects of the present disclosure may be directed to cases where the recording status indication shows that the camera is on so that the human can be intentionally informed that the human is being recorded, which may help deter one or more non-desired (e.g., criminal) activities.

Aspects of the present disclosure may notify or alert a human who is intentionally directed to or notified of the recording status indication corresponding the recording being on. This may be the case when a secure area has been breached or a secure item has been moved/taken (such as at exhibits of art, jewelry, and other items that can be taken). The human may be directed by sound such as speech or beeping or other sound. The sound itself may indicate the recording status indication or may direct the human to another device (a display) that indicates the recording status indication. Thus, as used herein, "directing the attention of the user to the human-perceptible recording status indication" means doing something in addition to "simply" presenting the human-perceptible recording status indication. This may include flashing the human-perceptible recording status indication on a display to highlight its presence, providing a sound proximate to a display that is presenting the human-perceptible recording status indication, sounding an alarm before and after the human-perceptible recording status indication, and otherwise specifically directing the attention of the user to the human-perceptible recording status indication to ensure the user is alerted to the human-perceptible recording status indication.

Thus, any of the preceding described recording status indications may be provided to a human to intentionally inform the human that they are being recorded. A message could accompany the recording status indication such as, but not limited to, "secure area - recording in progress" and so forth. A message could accompany the recording status indication such as, but not limited to, "item stolen - recording in progress", and so forth. In any aspect, the clothes color and/or other descriptors (height, gender, etc.) of the offender may also be broadcast audibly (e.g., by a speaker(s)) or visually (by a monitor(s)) in order for the proper personal to be able to react, and/or the detected event (e.g., a potential crime) may be audibly or textually presented (e.g., "merchandise has been removed without payment").

As yet another example, the actual video being recorded can be displayed at times when the camera is recording along with the recording status (of "on"). This can act as a deterrent in the case someone is where they should not be, or doing something they should not be (e.g., a potential crime, such as assault, theft, etc.). Such a video recording can also serve as evidence for the event, such as in a court of law.

A potential crime may be detected in various ways. In an aspect, a potential crime may be detected by the use of sensors (e.g., weight sensors, cameras, etc.). In an aspect, sensors may be configured to detect the removal of objects.

In an aspect, a weight sensor may detect a change (reduction) in weight and indicate that a corresponding monitored item has been removed. In such a case, the weight sensor may provide an output signal to one or more processors that are in control of providing the human-perceptible recording status indication and/or turning on or off one or more cameras. For example, a camera(s) previously turned off and directed to the item and an escape route may be turned on with an indication that the cameras are recording and optionally a description of the person suspected of taking the item responsive to the weight sensor indicating the removal of the item.

In an aspect, images captured by cameras may be compared to a database of images of crimes and/or other acts of interest. In this way, pattern (image or sub-image) matching between a current image or set of images in the database can be performed in order to detect the occurrence of a crime. Upon the detection of a crime by the one or more processors based on the matching, the human-perceptible recording status indication and recording status (ON or OFF) of the camera can be controlled.

As yet another example, a notification can be sent to proximate devices such as smart devices (smart phones), including but not limited to a device of the human recorded by the camera(s), in order to indicate the recording status of proximate cameras. BLUETOOTH, WIFI, and other wireless transmission protocols may be used to inform the human of the recording status of proximate cameras. In an aspect, this notification can be provided as part of an existing application such as a scheduling application at an airport, railroad, bus depot, and so forth. In this way, a user need not stop what they are doing and log into a separate application when they are in an airport to see if they are being recorded. Instead, an application they are already expected to be using at the airport such as a scheduling application may be modified to show and/or otherwise provide the human-perceptible recording status indication. This can also apply to applications used at supermarkets where sales information is provided to persons in the store on their smart phone. The sales information can be supplemented with the human-perceptible recording status indication.

The preceding and subsequent examples and aspects are not mutually exclusive and may be readily combined depending upon the implementation, given the teachings of the present disclosure provided herein.

In an aspect, a user (e.g., system administrator) can configure the camera to indicate recording status. This can actuate (e.g., flash or turn on) an element on board the camera (LEDs) or a device (e.g., speaker, display, etc.) proximate to the camera to generate the camera recording status indication as described herein. The user can manually initiate the recording status indication or can have the recording status indication be configured to occur automatically, for example, responsive to an event.

In an aspect, the detection of triggers such as events, motion, sound, weight, temperature rise, lighting activation, and so forth may automatically initiate or stop recording by one or more cameras and result in the providing of a corresponding recording status indication. Events can include, but are not limited to, e.g., a door opening, one or more lights being activated. Loitering, etc. The preceding and other features may be used to detect the presence of people, which may or may not initiate recording and a corresponding output on the recording status indicator. The camera itself may be used to detect the event (e.g., the door opening, loitering, etc.) and/or motion and/or other visually detectable events. A microphone may be used to identify sound and in an aspect, speech representative of the presence of people (using speech recognition) and/or one or more particular persons (using speaker recognition). A weight sensor may be used to detect the presence of people. A thermometer may be used to detect the room temperature and detect any rises in room temperature indicative of the presence of people. A photodetector may be used to detect the activation of lighting such as lighting automatically activated by motion, and use that detection to initiate recording or to stop recording depending on the situation and to indicate the corresponding recording status.

In an aspect, the present disclosure can be applied to cases involving a plurality of sensors, wherein sensor fusion is used to detect a trigger (e.g., an event) that either commences or stops recording by one or more camera (e.g., in a set or subset) and indicates the recording status to a human using one of the approaches described herein. Sensor fusion refers to combining the outputs of two or more sensors together in some way in order to determine an output (whether a trigger has occurred). Sensor fusion may involve applying one or more functions (addition, multiplication, etc.) to sensor outputs. Sensor fusion may involve weighting one sensor output(s) more than another sensor output(s) in a combination. For example, an unattended child in a store may be assigned a higher weight directed to starting recording, providing the human-perceptible recording status indication, and playing back the recording on a display device so that an adult with the child can see and locate the child. Object capable of being stolen may be assigned higher weights than stationary items such as tables.

In an aspect, data may be aggregated in the cloud, and used to detect patterns such as people, events, and so forth in images captured by cameras or other sensor output data. For example, patterns of people stealing may be compared to current images in order to detect the occurrence of a crime. Such a detection may result in one or more of the following: starting a previously shut off camera(s); indicating the human-perceptible recording status indication as recording; displaying current images of the suspected criminal; providing a description of the suspected criminal. One or more of these results may be implemented responsive to the combining of two or more sensor outputs, preferably of different types (weight sensor and camera, weight sensor and microphone, microphone and camera, and so forth).

Referring to the preceding lighting scenario, a human may activate motion-activated lights, and the detection of the light being activated (e.g., by photodetectors) may be used to initiate recording or to stop recording and to indicate the corresponding recording status. A weight sensor at a doorway may also be used in combination with the motion-activated lights to detect the entrance of people into a room and that detection may be used to initiate recording or to stop recording and to indicate the corresponding recording status. This can apply to all the preceding and following examples herein. As still a further example, microphones can detect sound (or speech in conjunction with a speech recognition system), and that detection in combination with the output of weight sensor having a person standing on the weight sensor may be used to initiate recording or to stop recording and to indicate the corresponding recording status. Thus, outputs from groups of sensors of two or more may be combined (fused) to provide the human-perceptible recording status indication.

In an aspect, the fusion of sensor data may be used to become aware of people who are about to enter a room or enter a camera viewing area beforehand through the use of connected sensors in, e.g., other spaces preceding a particular space. In this way, for example, the data in all portions of an environment, such as a building, airport, railroad, mall, bus terminal, campus, and so forth, can be integrated to minimize a false alarm rate with respect to camera recording activation and deactivation and/or the recording status indication for the camera. For example, a person's presence can more assuredly be determined based on the output of two or more sensors versus a single sensor. Moreover, such an approach minimizes delay in implementing and indicating a particular recording status. For example, the next location in path taken by a human walking from one area to another, e.g., room to room, can be predicted based on direction of travel to concurrently initiate or stop recording and indicate the camera recording status. In an aspect, an object tracking model may be used track persons from a first location to a second location using a first set of sensors at the first location and a second set of sensors at the second location. In an aspect, the outputs of various object tracking models can be combined to track a human over a long distance and/or through many rooms. In an aspect, the recording or stopping of recording and the corresponding recording status indication can even be provided before a door is opened to ensure that the first thing the human sees without delay is an indication of whether or not the human is being recorded, possibly showing them in a video in the case where the human is being recorded, e.g., as a deterrent.

In an aspect, different color LEDs or other different indicators may be used to indicate to a system user (camera system operator) with a certain confidence that a human is able to be identified in a video frame(s), e.g., based on distance, number of pixels, lighting, field of view, and so forth. As a further example, a first color (e.g., red) may indicate the identification of a human is unlikely from the video frame, a second color (e.g., orange) may indicate it is possible but not certain to be able identify the human from the video frame, and a third color (e.g., green) may indicate the human can be assuredly identified from the video frame. In this way, the different indicators may represent a quality of potential evidence that may be associated with the video frame(s), such as in the case where such evidence may be useful in documenting a potential crime being recorded.

In an aspect, the camera may use artificial intelligence and/or pattern recognition to automatically enable the recording status indicator of a camera when a human comes within a given region proximate to the camera. For example, a learning algorithm can learn specific people expected to be seen according to some schedule or may simply reduce error over time due to better people recognition.

In an aspect, the camera is a CCTV camera. In an aspect, the camera is a doorbell camera. In an aspect, the camera is a body-worn camera. It is to be appreciated that the aspects of the present disclosure can be applied to any type of camera for which a human would be interested in knowing whether or not they are being recorded.

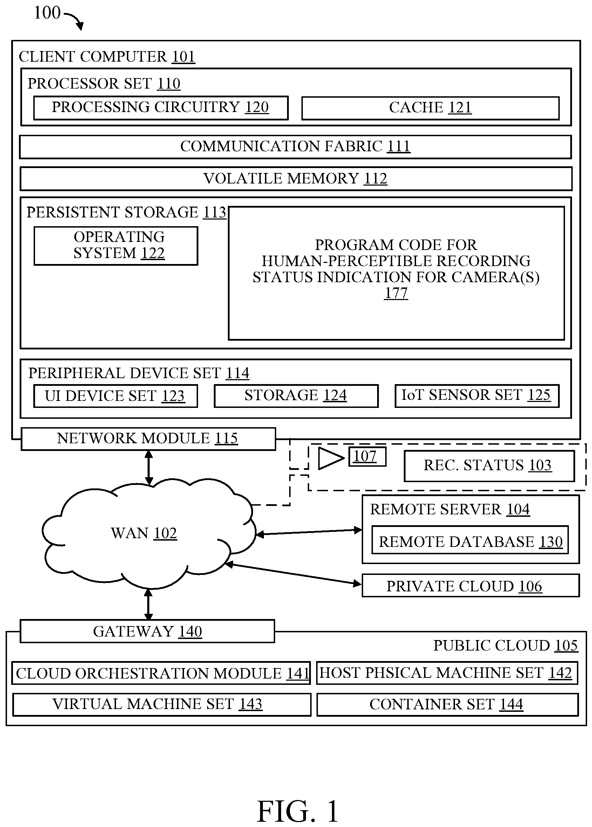

Referring to **FIG. 1****,** an example computing environment 100 is shown, in accordance with an aspect of the present disclosure.

Computing environment 100 includes an example of an environment including a client computer 101 configured for the execution of at least some of a program code 177 involved in performing the methods described herein relating to presenting a recording status indication 103 of one or more cameras 107. The program code 177 may include one or more sets of computer-executable instructions that when run, or executed by, one or more processors, individually or in combination, perform the method described herein. The one or more cameras 107 may be integral with, or separate from, the client computer 101. Moreover, the recording status indication 103 may be a visual and/or audible, humanly-perceptible notification of whether or not the respective camera 107 is recording. The computing environment 100, in addition to computer code 177, further includes for example, client computer 101, wide area network (WAN) 102, remote server 104, public cloud 105, and private cloud 106. In this aspect, computer 101 includes processor set 110 (including processing circuitry 120 and cache 121), communication fabric 111, volatile memory 112, persistent storage 113 (including operating system 122 and block 177, as identified above), peripheral device set 114 (including user interface (UI), device set 123, storage 124, and Internet of Things (IoT) sensor set 125), and network module 115. Remote server 104 includes remote database 130. Public cloud 105 includes gateway 140, cloud orchestration module 141, host physical machine set 142, virtual machine set 143, and container set 144.

Computer 101 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 130. Alternatively, performance of the computer-implemented method(s) described herein may be distributed among multiple computers and/or between multiple locations. For the sake of simplicity, in this presentation of computing environment 100, the following detailed discussion is focused on a single computer, specifically computer 101. Computer 101 may be located in a cloud, even though computer 101 is not shown in a cloud in FIG. 1. On the other hand, computer 101 is not required to be in a cloud except to any extent as may be affirmatively indicated. Computer 101 may be interchangeably referred to herein as "voice user interface (VUI)-based device" 101.

Processor set 110 includes one or more computer processors of any type. Processing circuitry 120 may be distributed over multiple packages, for example, multiple, coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located "off chip." In some computing environments, processor set 110 may be designed for working with qubits and performing quantum computing.

Computer readable program instructions are typically loaded onto computer 101 to cause a series of operational steps to be performed by processor set 110 of computer 101 and thereby effect a computer-implemented method, such that the instructions thus executed will instantiate the methods specified in flowcharts and/or narrative descriptions of computer-implemented methods included in this document (collectively referred to as "the inventive methods"). These computer readable program instructions are stored in various types of computer readable storage media, such as cache 121 and the other storage media discussed below. The program instructions, and associated data, are accessed by processor set 110 to control and direct performance of the inventive methods. In computing environment 100, at least some of the instructions for performing the inventive methods may be stored in block 177 in persistent storage 113.

Communication fabric 111 is the signal conduction paths that allow the various components of computer 101 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

Volatile memory 112 is any type of volatile memory now known or to be developed in the future. Examples include dynamic type random access memory (RAM) or static type RAM. Typically, the volatile memory is characterized by random access, but this is not required unless affirmatively indicated. In computer 101, the volatile memory 112 is located in a single package and is internal to computer 101, but, alternatively or additionally, the volatile memory may be distributed over multiple packages and/or located externally with respect to computer 101. Relating to an online aspect, volatile memory 112 may include a first buffer 112A for collecting input samples and a second buffer 112B for outputting the processed audio.

Persistent storage 113 is any form of non-volatile storage for computers that is now known or to be developed in the future. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data and re-writing of data. Some familiar forms of persistent storage include magnetic disks and solid state storage devices. Operating system 122 may take several forms, such as various known proprietary operating systems or open source Portable Operating System Interface type operating systems that employ a kernel. The code included in block 177 typically includes at least some of the computer code involved in performing the inventive methods.

Peripheral device set 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion type connections (for example, secure digital (SD) card), connections made though local area communication networks and even connections made through wide area networks such as the internet. In various aspects, UI device set 123 may include components such as one or more of a display screen, speaker, microphone array, wearable devices (such as goggles and smart watches), keyboard, mouse, printer, touchpad, virtual reality goggles, augmented reality goggles, mixed reality goggles, game controllers, a voice user interface (VUI), an automatic speech recognition system (ASR), a text-to-speech (TTS) system, cameras, and haptic devices. Storage 124 is external storage, such as an external hard drive, or insertable storage, such as an SD card. Storage 124 may be persistent and/or volatile. In some aspects, storage 124 may take the form of a quantum computing storage device for storing data in the form of qubits. In aspects where computer 101 is required to have a large amount of storage (for example, where computer 101 locally stores and manages a large database) then this storage may be provided by peripheral storage devices designed for storing very large amounts of data, such as a storage area network (SAN) that is shared by multiple, geographically distributed computers. IoT sensor set 125 is made up of one or more sensors that can be used in Internet of Things applications. For example, one sensor may be a thermometer and another sensor may be a motion detector.

Further regarding peripheral device set 114, the same is emphasized to include a set of cameras. In an aspect, the cameras are CCTV cameras. In an aspect, the cameras are doorbell cameras. In an aspect, the cameras are body-worn cameras. It is to be appreciated that the aspects of the present disclosure can be applied to any type of camera for which a human would be interested in knowing whether or not they are being recorded.

Network module 115 is the collection of computer software, hardware, and firmware that allows computer 101 to communicate with other computers through WAN 102. Network module 115 may include hardware, such as modems or Wi-Fi signal transceivers, software for packetizing and/or de-packetizing data for communication network transmission, and/or web browser software for communicating data over the internet. In some aspects, network control functions and network forwarding functions of network module 115 are performed on the same physical hardware device. In other aspects (for example, aspects that utilize software-defined networking (SDN)), the control functions and the forwarding functions of network module 115 are performed on physically separate devices, such that the control functions manage several different network hardware devices. Computer readable program instructions for performing the inventive methods can typically be downloaded to computer 101 from an external computer or external storage device through a network adapter card or network interface included in network module 115.

WAN 102 is any wide area network (for example, the internet) capable of communicating computer data over non-local distances by any technology for communicating computer data, now known or to be developed in the future. In some aspects, the WAN may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

Remote server 104 is any computer system that serves at least some data and/or functionality to computer 101. Remote server 104 may be controlled and used by the same entity that operates computer 101. Remote server 104 represents the machine(s) that collect and store helpful and useful data for use by other computers, such as computer 101.

Public cloud 105 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 105 is performed by the computer hardware and/or software of cloud orchestration module 141. The computing resources provided by public cloud 105 are typically implemented by virtual computing environments that run on various computers making up the computers of host physical machine set 142, which is the universe of physical computers in and/or available to public cloud 105. The virtual computing environments (VCEs) typically take the form of virtual machines from virtual machine set 143 and/or containers from container set 144. It is understood that these VCEs may be stored as images and may be transferred among and between the various physical machine hosts, either as images or after instantiation of the VCE. Cloud orchestration module 141 manages the transfer and storage of images, deploys new instantiations of VCEs and manages active instantiations of VCE deployments. Gateway 140 is the collection of computer software, hardware, and firmware that allows public cloud 105 to communicate through WAN 102.

Public cloud 105 may provide a subscription service for people interaction to a plurality of users such as a user of computer 101. The service can have multiple purposes for people interaction. Such purposes for people interaction can include dating, friendship, and business.

In an aspect, public cloud 105 operates in conjunction with remote server 104 to enable profile information of users to be retrieved and provided to a user such as one using computer 101 and/or another user operating a similar device as computer 101.

Private cloud 106 is similar to public cloud 105, except that the computing resources are only available for use by a single enterprise. While private cloud 106 is depicted as being in communication with WAN 102, in other aspects a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this aspect, public cloud 105 and private cloud 106 are both part of a larger hybrid cloud.

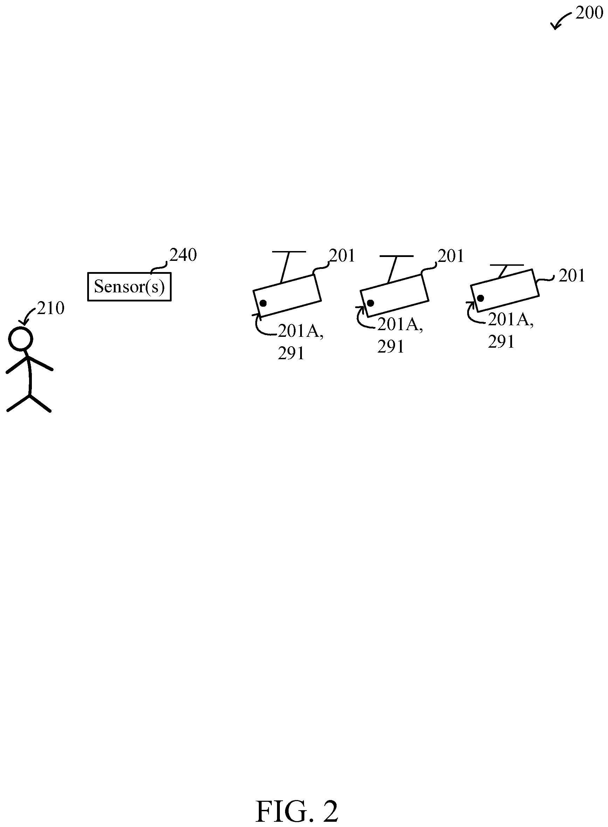

Computing environment 100 is presented to emphasize the computing devices involved in controlling one or more cameras 107 and outputting their recording status indication 105 in accordance with aspects of the present disclosure. Environments 200-600 are presented to emphasize the use of cameras and possibly other separate devices to provide a human-perceptible recording status indication for the cameras. As such, a controlling computing device such as computer 101 is not shown in **FIGS. 2-6****,** but may or may not be used to perform the following steps/functions described with respect to the elements shown in **FIGS. 2-6****.**

In an aspect, one or more sensors may be used to detect a trigger(s) that may at least result in the providing of the recording status indication for the cameras. The recording status indication for the camera may be provided using the camera themselves or separate devices with respect to the camera. In an aspect, detection of the trigger may further result in the commencing or ceasing of recording by the camera. In an aspect, one of the cameras may be used as a sensor to detect the trigger(s) or some other sensor (e.g., microphone, weight, thermometer, photodetector, and so forth) may be used to detect the trigger(s).

Referring to **FIG. 2****,** an example environment 200 is shown, in accordance with example aspects of the present disclosure. Environment 200 may include part or all of computing environment 100. Environment 200 includes cameras 201, on-board lighted emitting diodes (LEDs) 201A, one or more sensors 240, and a human 210. In the example of **FIG. 2****,** on-board lighted emitting diodes (LEDs) 201A of cameras 201 are used to provide a human-perceptible recording status indication 291 for cameras 201.

Cameras 201 have a field of view that includes the location of the human 210. The cameras 201 each include an on-board LED 201A configured to provide a human-perceptible recording status indication 291 for the camera 201 on which it is included.

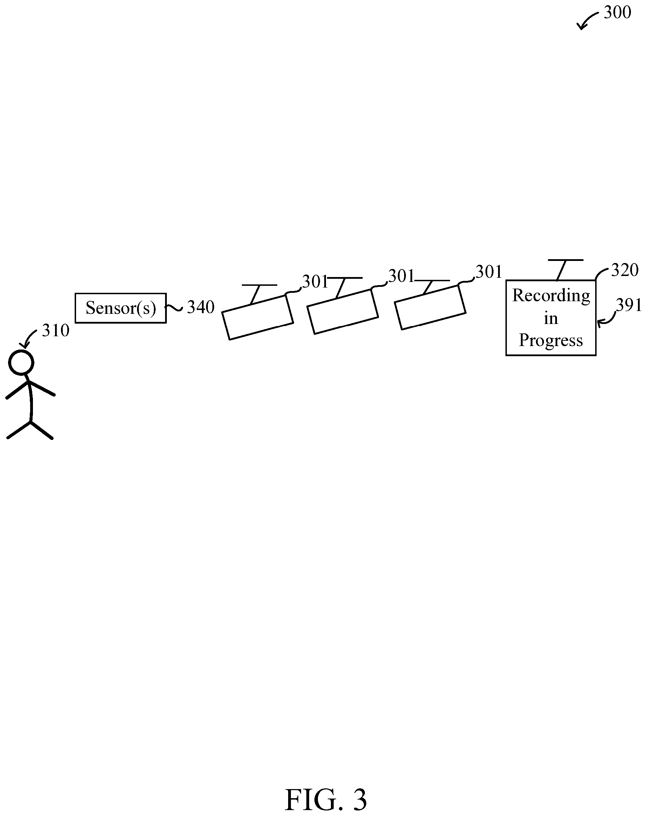

Text (not shown, see, e.g., **FIG. 3****)** may be displayed near the LEDs 201A to indicate that the on-board LEDs 201A pertain to a recording status of the cameras 201. The text may be temporally affixed (e.g., a sticker) or permanently affixed (molded in the camera bodies) on the cameras 201 or may be shown on a separate display device (see, e.g., **FIG. 3****).**

Referring to **FIG. 3****,** another example environment 300 is shown, in accordance with example aspects of the present disclosure. Environment 300 may include part or all of computing environment 100. Environment 300 includes cameras 301, one or more separate dedicated display devices 320, one or more sensors 340, and a human 310. In the example of **FIG. 3****,** the one or more separate dedicated display devices 320 are used to provide a human-perceptible recording status indication 391 for the cameras 301.

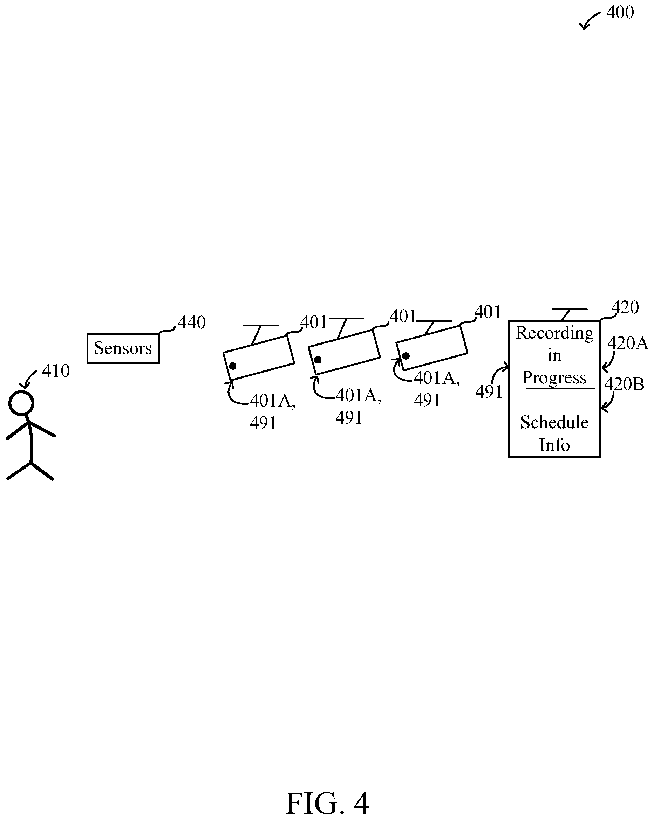

Cameras 301 have a field of view that includes the location of the human 310. One or more separate dedicated display devices 320 indicate the human-perceptible recording status indication 391. In the example of FIG. 3, the human-perceptible recording status indication 391 is provided as the textual statement "recording in progress." While shown as dedicated display devices in the example, the one or more display devices 320 may also be repurposed from performing at least one more other function such as display scheduling information (see, e.g., **FIG. 4****).**

Referring to **FIG. 4****,** yet another example environment 400 is shown, in accordance with example aspects of the present disclosure. Environment 400 may include part or all of computing environment 100. Environment 400 includes cameras 401, on-board lighted emitting diodes (LEDs) 401A, one or more separate multi-function display devices 420, one or more sensors 440, and a human 410. In the example of **FIG. 4****,** the on-board LEDs 401A of cameras 401 and the one or more separate multi-purpose display devices 420 are used to provide a human-perceptible recording status indication 491 for the cameras 401.

Cameras 401 have a field of view that includes the location of the human 410. The cameras 401 each include an onboard LED 401A configured to provide the human-perceptible recording status indication 491 for the camera 401 on which it is included. Text may be displayed near the onboard LEDs 401A to indicate that the onboard LEDs 401A pertain to a recording status of the cameras 401. In the example of **FIG. 4****,** the one or more separate multi-function display devices 420 indicate "recording in progress" in a camera recording status portion 420A of the display device 420 and further indicate additional information, unrelated to the recording status in another portion (e.g., an additional information portion) 420B of the one or more separate multi-function display devices 420. The lighting of the LEDs 401A and text "recording in progress" independently and/or cooperatively serve as the human-perceptible recording status indication 491.

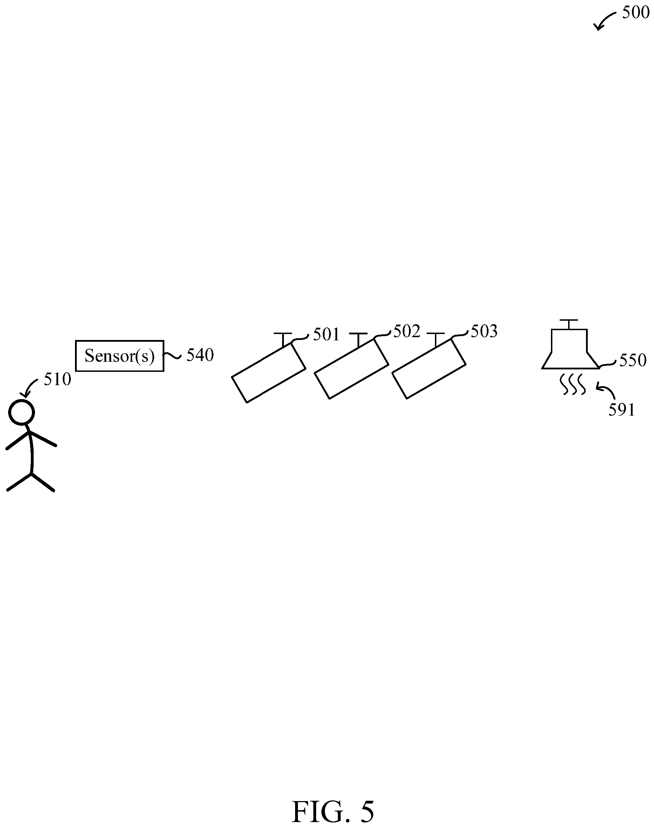

Referring to **FIG. 5****,** still another example environment 500 is shown, in accordance with example aspects of the present disclosure. Environment 500 may include part or all of computing environment 100. Environment 500 includes cameras 501, one or more separate speakers 550, one or more sensors 540, and a human 510. In the example of **FIG. 5****,** the one or more separate speakers 550 are used to provide a human-perceptible recording status indication for the cameras 501.

Cameras 501 have a field of view that includes the location of the human 510. One or more separate speakers 550 indicate the human-perceptible recording status indication 591. In the example of **FIG. 5****,** the human-perceptible recording status indication 591 for the cameras is provided as the verbal statement "recording in progress." The one or more speakers 501 may be dedicated speakers for the purpose of providing the human-perceptible recording status indication 591 or may be repurposed to perform at least one other function (e.g., indicate scheduling information such as flight/train arrivals departures in an airport/train station environment, emergency (fire) instructions, directory information, traffic information, etc.). For example, a repurposing of a device may involve configuring that device, in addition to performing its already assigned or dynamically assigned duties, to also receive status information from the camera or separate computer 101 controlling the camera. The status information may be received, for example, as a unicast message or a broadcast message by any device in a known set of devices.

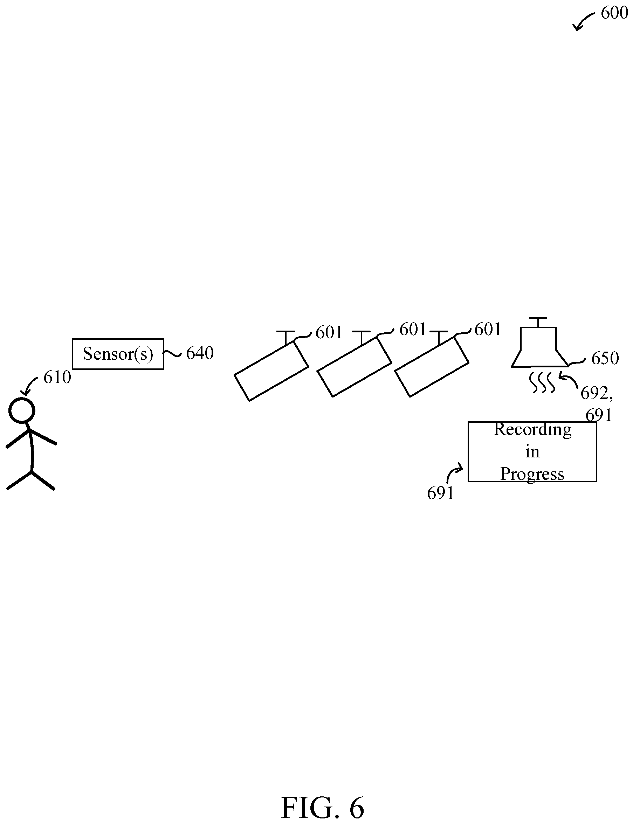

Referring to **FIG. 6****,** still yet another example environment 600 is shown, in accordance with example aspects of the present disclosure. Environment 600 may include part or all of computing environment 100. Environment 600 includes cameras 601, one or more separate (dedicated function or multi-function) display devices 620, one or more separate speakers 650, one or more sensors 640, and a human 610. In the example of **FIG. 6****,** the one or more speakers 650 and one or more display devices 620 are used to provide a human-perceptible recording status indication 691 for the cameras 601 and/or the one or more speakers 650 generate a sound to direct the attention of human to the one or more display devices 620 that provide the human-perceptible recording status indication 691.

In an aspect, the one or more separate speakers 650 may generate the human-perceptible recording status indication 691 along with the one or more separate display devices 620.

In an aspect, the one or more separate speakers 650 may generate a sound 692 (e.g., chirping, beeping, alarm, buzzer, recorded or live voice message, etc.) to direct the attention of human to the human-perceptible recording status indication 691 displayed on the one or more separate display devices 620.

In the example of **FIG. 6****,** the human-perceptible recording status indication 691 is provided as the verbal and/or textual statement "recording in progress."

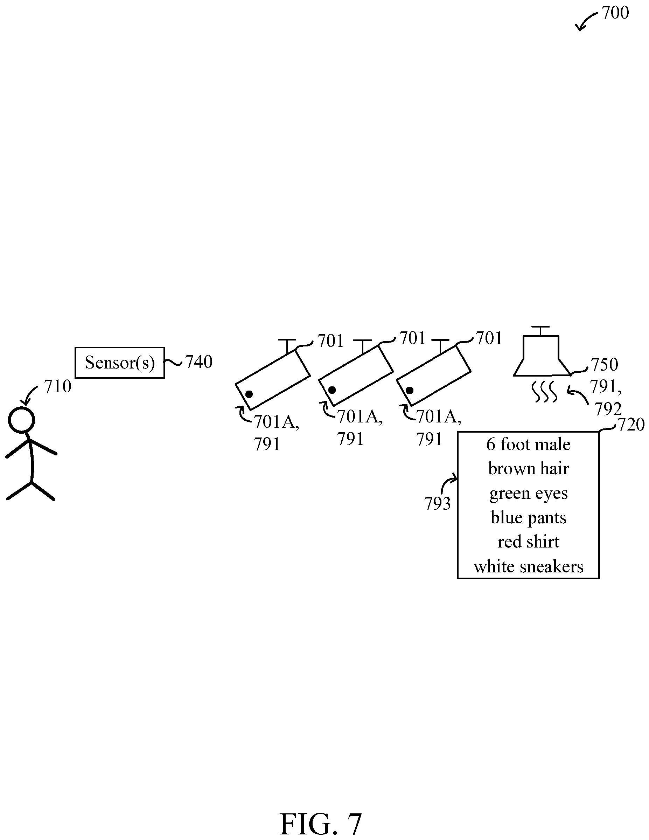

Referring to **FIG. 7****,** a further example environment 700 is shown, in accordance with example aspects of the present disclosure. Environment 700 may include part or all of computing environment 100. Environment 700 includes cameras 701, one or more separate (dedicated-function or multi-function) display devices 720, one or more separate speakers 750, one or more sensors 740, and a human 710. In the example of **FIG. 7****,** the on-board LEDs 701A are used to provide a human-perceptible recording status indication 791 for the cameras 701, the one or more display devices 720 are used to display a description 793 of a subject human (e.g., believed to have committed a potential crime or for some other identifying purpose (lost child, etc.)), and the one or more separate speakers 750 are used to generate a sound 792 to direct the attention of human to the one or more display screens 720 and/or the LEDs 701A. and/or to acoustically reproduce the human-perceptible recording status indication 791.

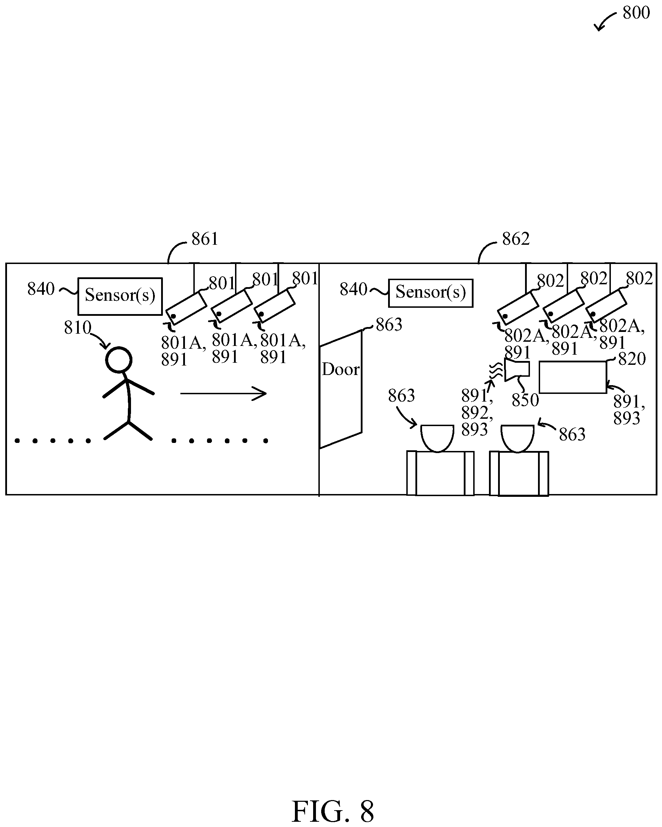

Referring to **FIG. 8****,** a yet further example environment 800 is shown, in accordance with example aspects of the present disclosure. Environment 800 may include part or all of computing environment 100.

Environment 800 includes cameras 801 and 802, on-board lighted emitting diodes (LEDs) 801A and 802A, rooms 861 and 862, one or more separate (dedicated-function or multi-function) display devices 820, one or more separate speakers 850, one or more sensors 840, and a human 810. In the example of **FIG. 8****,** the on-board LEDs 801A and 802A are used to provide a human-perceptible recording status indication 891 for the cameras 801 and 802, the one or more display devices 820 are used to display a description 893 of a subject human (e.g., believed to have committed a potential crime or for some other identifying purpose (lost child, etc.)), and the one or more separate speakers 850 are used to generate a sound 792 to direct the attention of human to the one or more display screens 820 and/or the LEDs 801A and/or to acoustically reproduce the human-perceptible recording status indication 891.

In this example, sensors 840 from an area (such as but not limited to a room) 861, including cameras 801, can function to provide an early warning based on a detected trajectory of the human 810 that the human will use the access point (such as but not limited to a door) 863 to enter an adjacent area (such as but not limited to another room) 862 in order to, without delay, start up the cameras 802 and/or reproduce the human-perceptible recording status indication 891 on the cameras 802, the one or more speakers 805, and/or the one or more displays 820. The trajectory of the human 810 can be detected, that is predicted, based on, e.g., a current path of the human 801 including direction of travel. In an aspect, stored paths that match the human's path thus far may be matched with respect to a database in order to determine the remainder of the human's path. For example, the humans path thus far may have been through locations A and B. Stored paths that include locations A and B also include location C, and thus, if locations A and B are passed, then location C may be predicted as a next location. In an aspect, a mapping of items in the room including doors and objects of interest (e.g., items that can be stolen) can be considered in predicting a user trajectory. For example, if the human is walking quickly it is likely then will continue through a door or to an item of interest versus stopping at a location having nothing of interest there. In an aspect, the one or more displays 820 and/or the one or more speakers 850 can reproduce (show, textually list, verbally list, etc.) identifying characteristics of the human. In an aspect, the one or more speakers 850 can produce a sound 892 to generate attention of human 810 to the one or more display screens 820 and/or the LEDs 801A. and/or to acoustically reproduce the human-perceptible recording status indication 891.

Cameras 802 can be purposed to "watch" items 863 and indicate when they are taken by recording the taker on the cameras 802 and/or 801 (when they escape), sounding an alarm on the one or more speakers 850, and displaying an alarm, the taker, and/or their characteristics, along with providing the human-perceptible recording status indication 891.

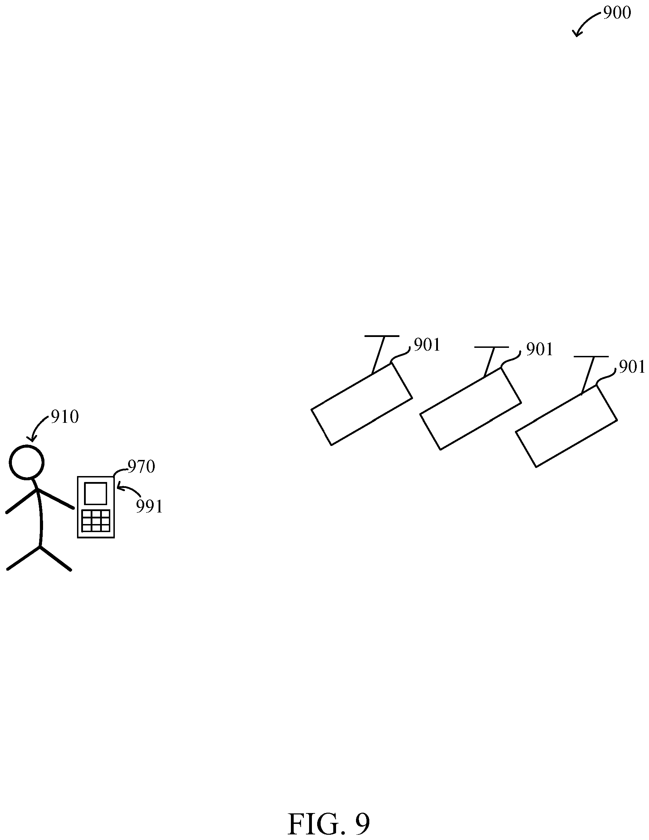

Referring to **FIG. 9****,** a still yet further example environment 900 is shown, in accordance with example aspects of the present disclosure. Environment 900 may include part or all of computing environment 100. Environment 900 includes cameras 901, one or more sensors 940, a human 910, and a human device 970 (e.g., human smartphone, etc.). In the example of **FIG. 9****,** the human's 910 device 970 is used to provide a human-perceptible recording status indication 991 for cameras 901.

Cameras 901 have a field of view that includes the location of the human 910. Text (not shown) and/or speech may be reproduced on a display and/or speaker of the human device 970 to indicate the human-perceptible recording status indication 991.

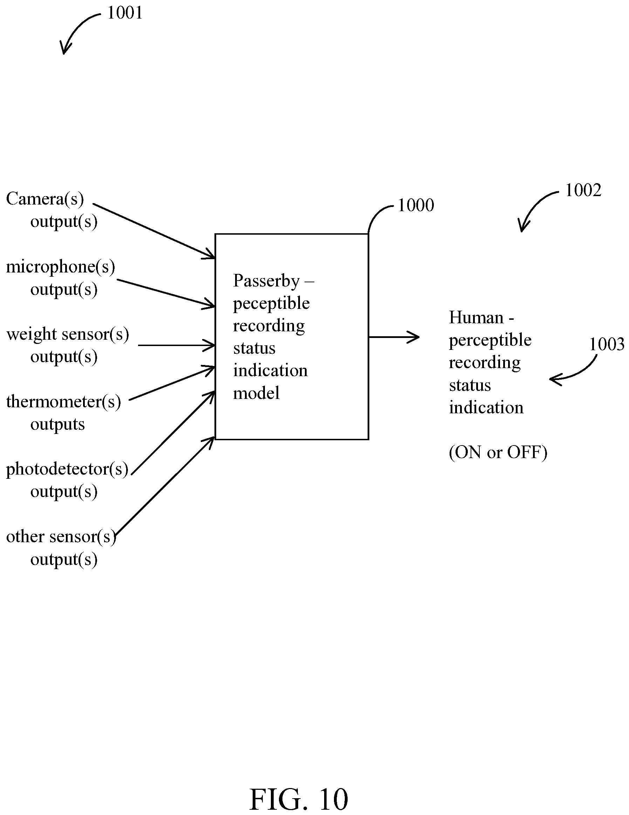

Referring to **FIG. 10****,** an example human-perceptible recording status indication model 1000 is shown, in accordance with example aspects of the present disclosure.

The human-perceptible recording status indication model 1000 may include one or more neural networks and/or rule based networks and/or other types of information processing networks. Preferably, human-perceptible recording status indication model 1000 is a deep neural network having two or more hidden layers.

In an aspect, inputs 1001 to the human-perceptible recording status indication model 1000 include sensor inputs. In an aspect, the sensor inputs may include one or more of camera(s) output(s), microphone(s) output(s), weight sensor(s) output(s), thermometer(s) output(s), photodetector(s) output(s), and other sensor(s) output(s).

In an aspect, outputs 1002 from the human-perceptible recording status indication model 1000 include human-perceptible recording status indication 1003 (i.e., ON or OFF).

In an aspect, the inputs 1001 are processed by the model 1000 to provide the binary output 1003. In an aspect, the model 1000 is at least a two-stage model in that a first hidden stage processes the sensor inputs to determine whether a trigger (event (e.g., taking/stealing, wandering aimlessly, etc.), motion, weight, temperature, light, etc.) has been detected. In an aspect, the trigger (e.g., event, motion, weight, temperature, light) may correspond to the presence of a human and/or an action (e.g., taking/stealing and thus committing a potential crime) performed by the human and/or a condition (e.g., lost) of the human. In an aspect, an output of the first-stage, indicating the presence of a human and/or possibly an action and/or status of the human, may be provided as an input to a second-stage. In an aspect, the second stage may receive a plurality of inputs, one for each sensor or group of sensors (e.g., of a given type and/or in a given room), to determine human-perceptible recording status indication. The number of outputs may be configured depending on the implementation. In an aspect, all of the preceding basis for detection may be used to provide different levels of response to different stimuli. In an aspect, the outputs of the first stage (1 or many) are provided to the second stage in order to provide the binary output of ON or OFF for the human-perceptible recording status indication. For example, one output from the first stage may indicate the detection of a human, another output from the first stage may indicate an action taken by the human, and yet another output from the first stage may indicate a condition of the human. These may be separately or collectively considered, and weighted depending on the scenario. For example, an unattended child in department store may get assigned a large weight directed to turning the cameras on as well as a separate display device showing the camera view to show a parent in the vicinity where the child is on the separate display device.

In another aspect, each of these detections may be their own separate stages. For example, upon first detecting a human using a first model, then it may be determined what the human is doing using a second model, and a condition of the human using a third model. A fourth model may take the outputs from the preceding three models and provide the binary output of ON or OFF for the human-perceptible recording status indication. Each input to the fourth model may be weighted differently based on the scenario in which it is implemented.

These and other variations of human-perceptible recording status indication model 1000 are readily determined by one of skill in the art given the teachings of the present disclosure provided herein.

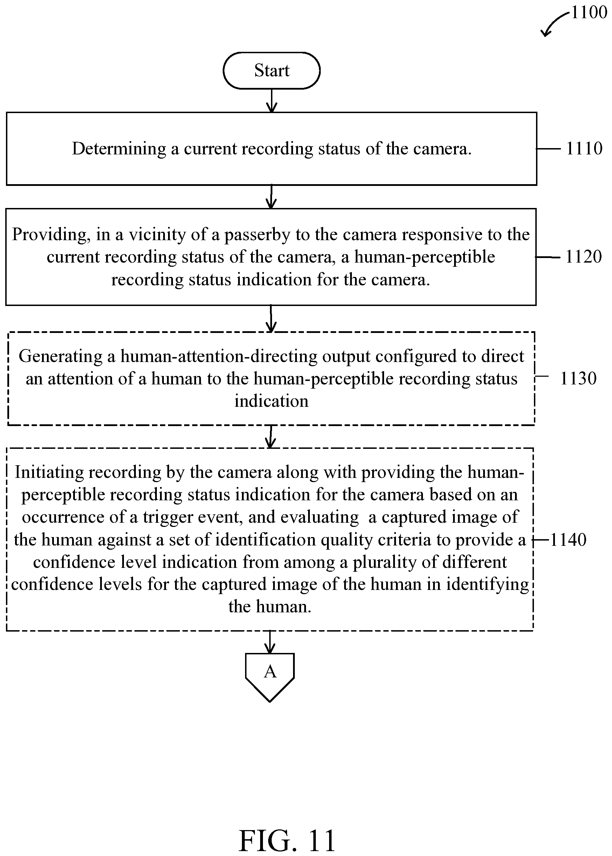

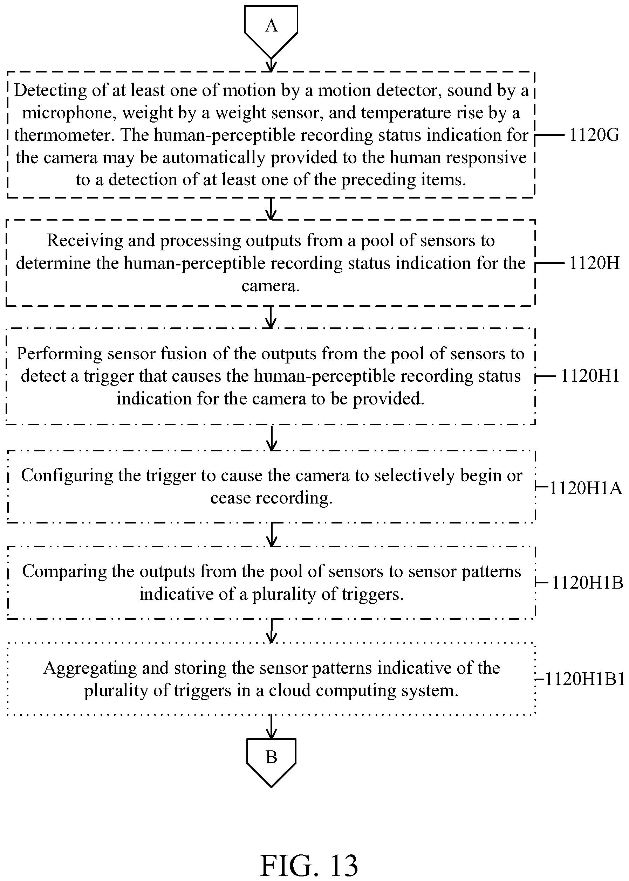

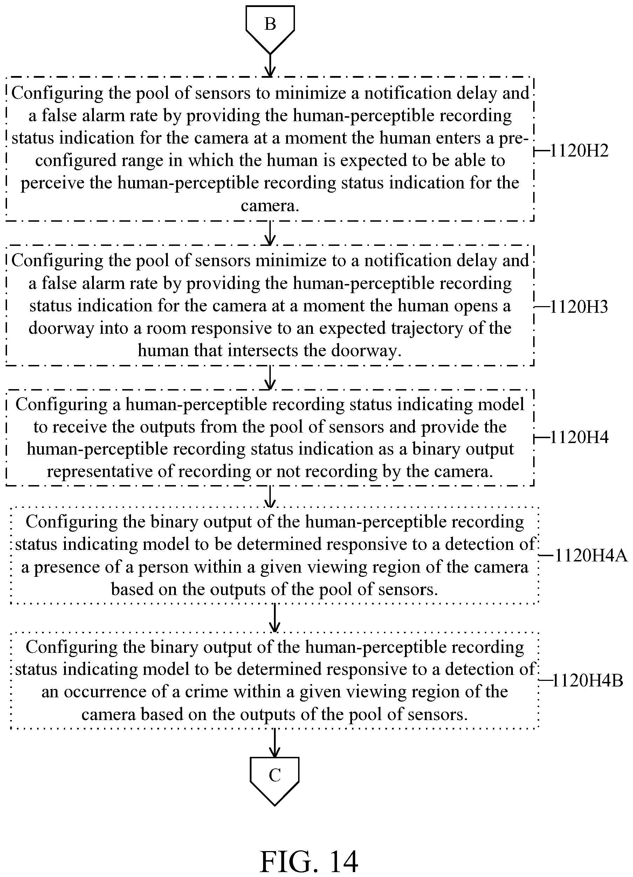

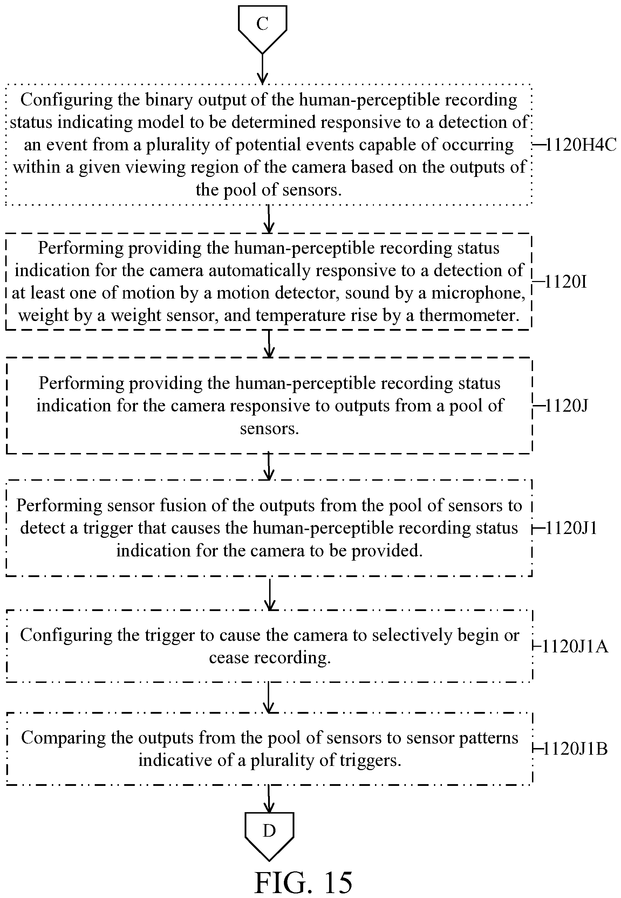

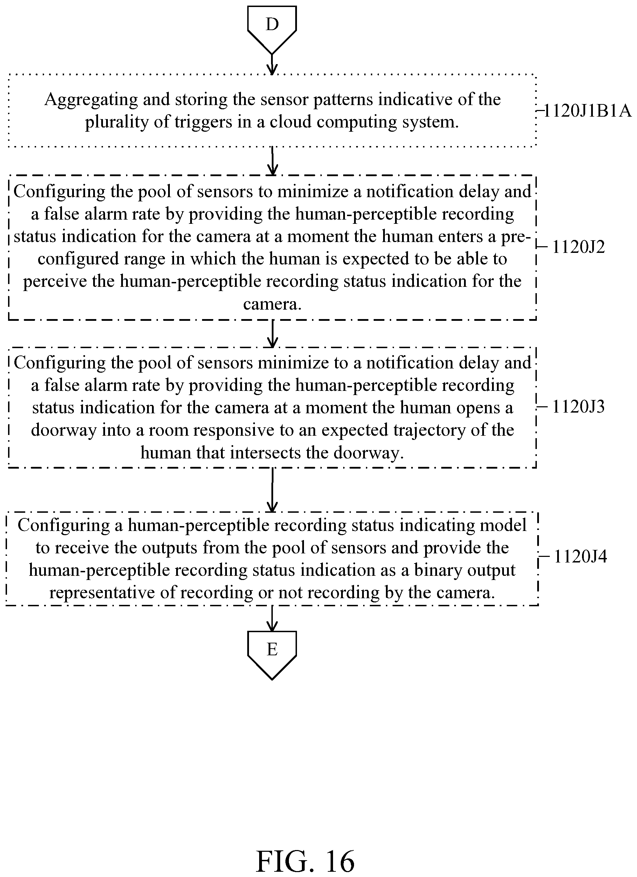

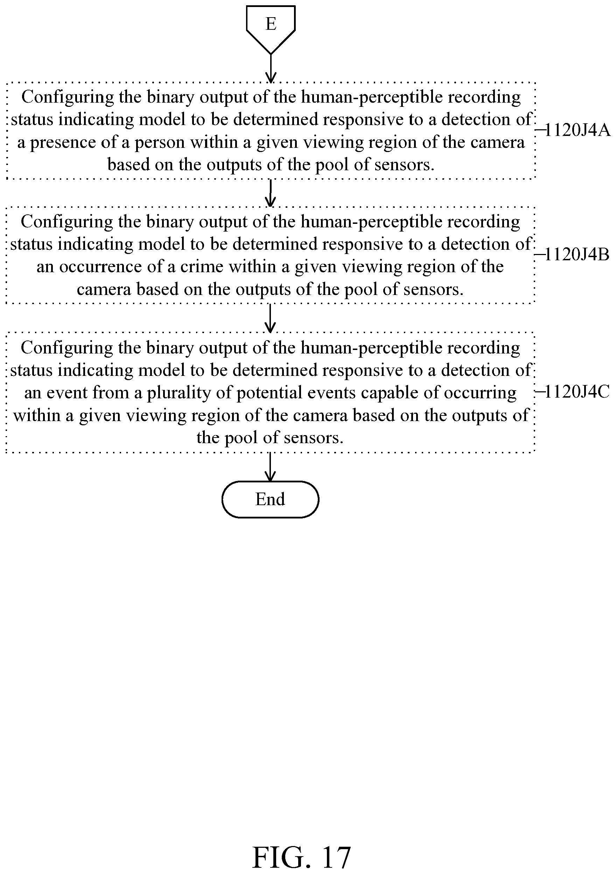

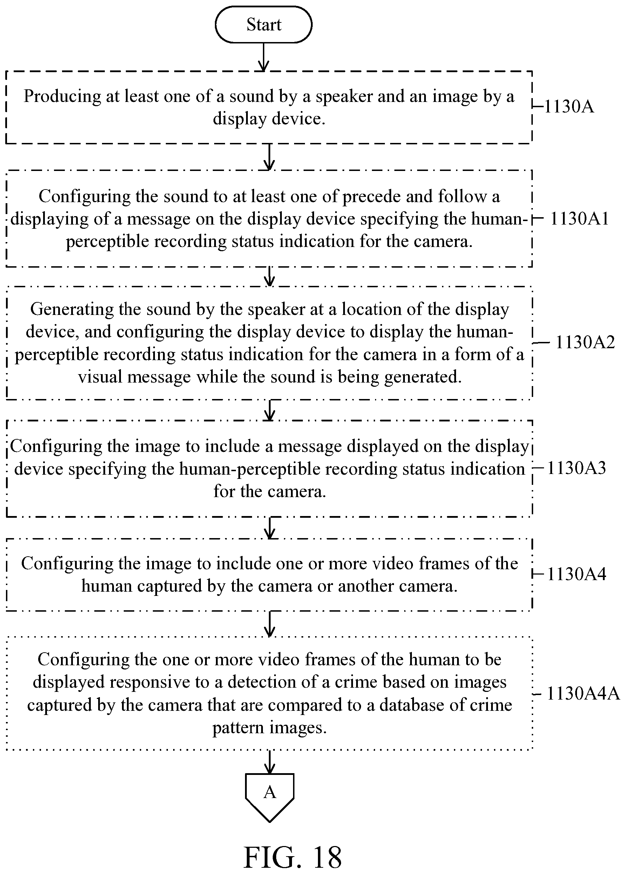

Referring now to **FIGS. 11-20****,** a method 1100 for providing a human-perceptible recording status indication for a camera is shown, in accordance with exemplary aspects of the present disclosure. Boxes shown in dashes or dashes and dots are optional features.

Method 1100 may be performed by one or more processors (e.g., processor set 110 of **FIG. 1****),** individually or in any combination, operatively coupled to one or more memories (e.g., persistent storage 113 of **FIG. 1****).** The method 1100 may be implemented, in part, by computer code (e.g., program code 177 of **FIG. 1****).**

Referring now to **FIG. 11****,** at block 1110, the method 1100 includes determining a current recording status of the camera. The camera may be any of a closed circuit television camera, a body-worn camera, a fixed camera, a stationary camera, a doorbell camera, and so forth. In any aspect, the camera is a body-worn camera, and the human-perceptible recording status indication for the camera is provided on a forward facing body-worn display operatively coupled to the camera. The determining is performed by at least the one or more processors 110 (see, e.g., **FIG. 1****).** For example, the one or more processors 110 evaluate the current camera recording status which indicates whether the camera is currently recording or not recording and based on the current camera recording status indicates whether the camera is recording or not recording as the human-perceptible recording status indication for the camera.

At block 1120, the method 1100 includes providing, in a vicinity of a human to the camera responsive to the current recording status of the camera, a human-perceptible recording status indication for the camera. For example, the camera itself and/or a display device and/or speaker located in the vicinity of the human and/or a device (e.g., smart phone, tablet, smart watch, smart glasses, and so forth) of the human may visually or audibly produce the human-perceptible recording status indication for the camera. In an aspect, a Light Emitting Diode (LED) on a camera itself is used to visually provide the human-perceptible recording status indication for the camera (see, e.g., **FIG. 2****).** In an aspect, a display device in the vicinity of the human displays the human-perceptible recording status indication for the camera, such as in the form of text and/or graphics (see, e.g., **FIGS. 3-4****).** In an aspect, a speaker in the vicinity of the human audibly produces the human-perceptible recording status indication for the camera, such as in the form of a sound (e.g., a voice message and/or any other type of sound) (see, e.g., **FIG. 5****).** In an aspect, both a speaker and a display device provide (i.e., display and audibly produced, respectively) the human-perceptible recording status indication for the camera (see, e.g., **FIG. 6****).**

In an aspect, the human-perceptible recording status indication for the camera may be provided responsive to a user input. For example, a user may monitor captured images and if suspicious behavior is detected, then the user may turn on a camera(s) and cause the human-perceptible recording status indication to be provided (e.g., displayed on a display device, audibly reproduced by a speaker, etc.) and/or otherwise outputted on the camera and/or another device.

In an aspect, the human-perceptible recording status indication for the camera may be provided and/or otherwise outputted automatically responsive to a detection of a trigger event (i.e., an event that triggers the camera to initiate recording, such as detecting the presence of a human, such as in an image captured by the camera and/or via a human sound (i.e., a voice) captured by a microphone of the camera, a change in weight on a scale in communication with the camera, a change in thermal energy detected by a sensor (e.g., passive infrared sensor) in communication with the camera).

The human-perceptible recording status indication for the camera may be provided visually and/or audibly and/or using some other method. In an aspect, a message indicating the human-perceptible recording status indication for the camera is displayed on a display device in the vicinity of a camera to visually inform passersby of the recording status of the camera (see, e.g., **FIG. 3****).** In an aspect, a message indicating the human-perceptible recording status indication for the camera is audibly reproduced by a speaker in the vicinity of a camera to audibly inform passersby of the recording status of the camera (see, e.g., **FIG. 5****).** In an aspect, both a visual and an audible method are used to enable people suffering loss of a sense (e.g., sight) to detect the human-perceptible recording status indication for the camera using a remaining sense (e.g., hearing) (see, e.g., **FIG. 6****).**

At block 1130, the method 1100 includes generating a human-attention-directing output configured to direct an attention of a human to the human-perceptible recording status indication. A human-attention-directing output is a human sense (sight, hearing, etc.) detectable output intended to direct the attention of a human to the human-perceptible recording status indication for the camera. The human-attention-directing output can be a sound or light or other means specifically configured and/or otherwise tailored to alert a human of the human-perceptible recording status indication for the camera. For example, in an aspect, a Light Emitting Diode (LED) or other light emitting device emitting a flashing or blinking or steady light may be placed adjacent a display device that shows the human-perceptible recording status indication for the camera. In an alternative or additional aspect, a speaker emitting an audible sound (e.g., beeping, chirping, etc.) may be placed adjacent a display device that shows the human-perceptible recording status indication for the camera. In this way, a human can be alerted to the human-perceptible recording status indication for the camera via sound, light, and/or so forth.

At block 1140, the method 1100 includes initiating recording by the camera along with providing the human-perceptible recording status indication for the camera based on an occurrence of a trigger event, and evaluating a captured image of the human against a set of identification quality criteria (i.e., criteria that can be used to judge a quality of an identification of a human or other object by a camera) to provide a confidence level indication from among a plurality of different confidence levels for the captured image of the human in identifying the human. For example, the distance from the camera to the human, whether the view of the human is obstructed, the resolution of the camera, the lighting, the pose of the person (facing the camera versus back to camera), and other identification quality criteria may be used to provide a confidence level for the captured image in identifying the human. As further example, a total confidence score may be 100, so each criterion may be equally weighted to obtain a score such that each criterion may add twenty five percent so that for four criteria (four are mentioned in the preceding sentence), each criterion will contribute twenty five points for a total possible high score of 100 points or 100 percent identification. The controller 101 for the system may be used to calculate the confidence level indication from the preceding information as determined from one or more sensors. As further description, a database of stored images may be compared to current images to judge whether a human within the vicinity or view of the camera is being obstructed and the pose (facing the camera versus not facing the camera) of the human. The camera may also be used to determine the human's position in a location and judge that the human's position relative to one or more landmarks to judge distance from a camera. The resolution of the camera will be pre-known and be able to be dynamically adjusted.

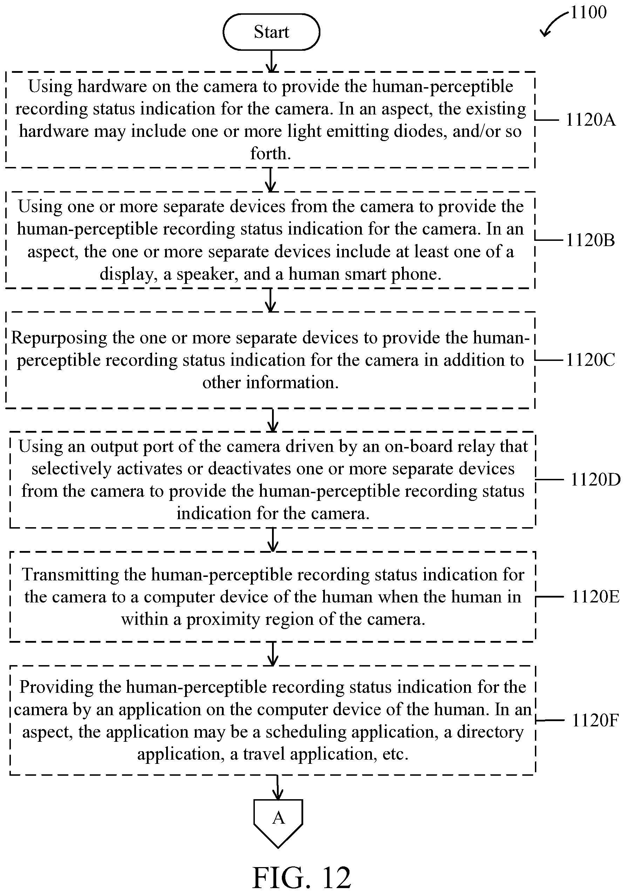

Referring to **FIGS. 12-18****,** block 1120 may include one or more of blocks 1120A through 11201 and are shown in accordance with an exemplary aspect.

At block 1120A, the method 1100 includes using hardware on the camera to provide the human-perceptible recording status indication for the camera. In an aspect, the hardware may include one or any combination of one or more light emitting diodes, one or more audio-generating devices (e.g., speakers), and/or so forth.

At block 1120B, the method 1100 includes using one or more separate devices from the camera to provide the human-perceptible recording status indication for the camera. In an aspect, the one or more separate devices include at least one of a display, a speaker, and a smart phone.

At block 1120C, the method 1100 includes repurposing (i.e., using for an intended reason and also to provide the human-perceptible recording status indication for the camera) the one or more separate devices to provide the human-perceptible recording status indication for the camera in addition to other information. For example, a display device indicating train schedules may be repurposed to also display the human-perceptible recording status indication for the camera. In an aspect, a banner or other structure may be used to visually convey the human-perceptible recording status indication for the camera on the repurposed one or more separate devices (e.g., above or below or adjacent a schedule, and so forth).

At block 1120D, the method 1100 includes using an output port of the camera driven by an on-board relay that selectively activates or deactivates one or more separate devices from the camera to provide the human-perceptible recording status indication for the camera. On-board power (e.g., USB, etc.) can be used to power the relay that may be selectively controlled. In another aspect, the output port of the camera provides a signal to an external relay that selectively activates or deactivates the one or more separate devices from the camera.

At block 1120E, the method 1100 includes transmitting the human-perceptible recording status indication for the camera to a computer device of the human when the human in within a proximity region of the camera. A transceiver or transmitter in the camera may be used to transmit the human-perceptible recording status indication for the camera to a transceiver or receiver in the computer device of the human. In an aspect, a short-range communication protocol may be used to transmit the human-perceptible recording status indication for the camera including BLUETOOTH, ZIGBEE, near-field and Personal Area Network (PAN) protocols, and so forth.

At block 1120F, the method 1100 includes providing (e.g., displaying, sounding out (e.g., using text-to-speech (TTS), etc.), and so forth) the human-perceptible recording status indication for the camera by an application (computer program) on the computer device of the human. In an aspect, the application may be a scheduling application, a directory application, a travel application, etc. In an aspect, the human-perceptible recording status indication for the camera is displayed on a screen on a display device of the computer device of the human. In an aspect, the human-perceptible recording status indication for the camera is provided in a portion of the screen corresponding to a particular application that is running and also displaying application content in the portion of the screen. For example, a scheduling application for a train may have arrival and departure times and track numbers and could have a banner running across that indicates the human-perceptible recording status indication for the camera. In an aspect, the human-perceptible recording status indication for the camera is audibly reproduced by a speaker of the computer device of the human. In an aspect, the speaker may be reproducing other content corresponding to one or more running applications (e.g., music) and may also audibly provide the human-perceptible recording status indication for the camera (e.g., announcing "CAMERA ON" or "CAMERA OFF"). In an aspect, the currently reproduced content (e.g., music) is paused so that the human-perceptible recording status indication for the camera can be clearly heard without interference from competing sounds from the same device.

At block 1120G, the method 1100 includes detecting of at least one of motion by a motion detector, sound by a microphone, weight by a weight sensor, and temperature rise by a thermometer. The human-perceptible recording status indication for the camera may be automatically provided to the human responsive to a detection of at least one of the preceding items.

At block 1120H, the method includes receiving and processing outputs from a plurality of sensors to determine the human-perceptible recording status indication for the camera.

In an aspect, block 1120H may include one or more of blocks 1120H 1 through 1120H4.

At block 1120H1, the method 1100 includes performing sensor fusion of the outputs from the plurality of sensors to detect a trigger that causes the human-perceptible recording status indication for the camera to be provided. Sensor fusion refers to combining, in any of a plurality of possible ways, the outputs from the plurality of sensors to reduce the number sensor outputs, e.g., when used as an input to calculate the recording status of the camera. In an aspect, all sensor outputs are combined into a single combined value or string of values. In another aspect, sensor outputs that are similar (e.g., those having the same type of information (e.g., audio, video, temperature, weight, etc.) and/or involve the same units of time may be combined and/or may be normalized (to common units (e.g., seconds, frames, etc.)) before combining. For example, in one aspect, the outputs from the plurality of sensors may be differently weighted depending upon their respective importance in determining a correct outcome, a number of that type of sensor deployed (the more sensors of a given type, the higher the weight for the outputs from that type of sensor), and so forth. In another aspect, the outputs from the plurality of sensors may be equally weighted to simply provide additional points of reference in a calculation of the recording status of the camera to detect a trigger that causes the human-perceptible recording status indication for the camera to be provided. These and other ways to perform sensor fusion of the outputs from the plurality of sensors may be used.

In an aspect, block 1120H1 may include one or more of blocks 1120H1A through 1120H1B.

At block 1120H1A, the method 1100 incudes configuring the trigger to cause the camera to selectively begin or cease recording.

At block 1120H1B, the method 1100 includes comparing the outputs from the plurality of sensors to stored sensor patterns in a database. The stored sensor patterns may be previous sensor outputs known to represent at least one of a plurality of triggers. A match between the outputs from the plurality of sensors and the stored sensor patterns indicates that a trigger has been detected. For example, current image showing an item being placed in a pocketbook may be compared to stored images that include an image of an item being placed in a pocketbook. In such a case, a match is detected and the metadata associated with the stored picture may also be displayed or verbally announced. The metadata may indicate the type of crime (e.g., theft) and what was stolen (e.g., wallet).

In an aspect, block 1120H1B may include block 1120H1B1.

At block 1120H1B1, the method 1100 includes aggregating and storing the sensor patterns indicative of the plurality of triggers in a cloud computing system.

At block 1120H2, the method 1100 includes configuring the plurality of sensors to minimize a notification delay and a false alarm rate by providing the human-perceptible recording status indication for the camera at a moment the human enters a pre-configured range in which the human is expected to be able to perceive the human-perceptible recording status indication for the camera.

At block 1120H3, the method 1100 incudes configuring the plurality of sensors minimize to a notification delay and a false alarm rate by providing the human-perceptible recording status indication for the camera at a moment the human opens a doorway responsive to an expected trajectory of the human that intersects the doorway.

At block 1120H4, the method 1100 includes configuring a human-perceptible recording status indicating model to receive the outputs from the plurality of sensors and provide the human-perceptible recording status indication as a binary output representative of recording or not recording by the camera.

In an aspect, block 1120H4 may include one or more of blocks 1120H4A through 1120H4C.

At block 1120H4A, the method 1100 includes configuring the binary output of the human-perceptible recording status indicating model to be determined responsive to a detection of a presence of a person within a given viewing region of the camera based on the outputs of the plurality of sensors.

At block 1120H4B, the method 1100 includes configuring the binary output of the human-perceptible recording status indicating model to be determined responsive to a detection of an occurrence of a potential crime within a given viewing region of the camera based on the outputs of the plurality of sensors.

At block 1120H4C, the method 1100 includes configuring the binary output of the human-perceptible recording status indicating model to be determined responsive to a detection of an event from a plurality of potential events (human steps on or off a weight sensor, human triggers an increase in ambient temperature detectable by a thermometer, presence of a human or an act (stealing, assault, etc.) performed by a human detectable using a camera) capable of occurring within a given viewing region of the camera based on the outputs of the plurality of sensors. In an aspect, the sensor outputs may be processed using artificial intelligence including machine learning. In an aspect, sensor outputs may be processed by comparing current sensor output data to previously stored sensor output data (sensor patterns) indicative of events to identify matches therebetween within an error margin. Machine learning may be used to reduce the error margin. In an aspect, the previously stored sensor output data may be labelled data that is correctly labelled and used in a supervised learning environment to learn new detection items that are to be identified and detected.

At block 11201, the method 1100 includes performing providing the human-perceptible recording status indication for the camera automatically responsive to a detection of at least one of motion by a motion detector, sound by a microphone, weight by a weight sensor, and temperature rise by a thermometer.

At block 1120J, the method 1100 includes performing providing the human-perceptible recording status indication for the camera responsive to outputs from a plurality of sensors.

In an aspect, block 1120J may include one or more of blocks 1120J1 through 1120J4.

At block 1120J1, the method 1100 includes performing sensor fusion of the outputs from the plurality of sensors to detect a trigger that causes the human-perceptible recording status indication for the camera to be provided.

In an aspect, block 1120J1 may include one or more of blocks 1120J1A and 1120J1B.

At block 1120J1A, the method 1100 includes configuring the trigger to cause the camera to selectively begin or cease recording.

At block 1120J1B, the method 1100 includes comparing the outputs from the plurality of sensors to sensor patterns indicative of a plurality of triggers.

In an aspect, block 1120J1B may include block 1120J1B1.

At block 1120J1B1A, the method 1100 includes aggregating and storing the sensor patterns indicative of the plurality of triggers in a cloud computing system.

At block 1120J2, the method 1100 includes configuring the plurality of sensors to minimize a notification delay and a false alarm rate by providing the human-perceptible recording status indication for the camera at a moment the human enters a pre-configured range in which the human is expected to be able to perceive the human-perceptible recording status indication for the camera.

At block 1120J3, the method 1100 includes configuring the plurality of sensors minimize to a notification delay and a false alarm rate by providing the human-perceptible recording status indication for the camera at a moment the human opens a doorway responsive to an expected trajectory of the human that intersects the doorway.

At block 1120J4, the method 1100 includes configuring a human-perceptible recording status indicating model to receive the outputs from the plurality of sensors and provide the human-perceptible recording status indication as a binary output representative of recording or not recording by the camera.

In an aspect, block 1120J4 may include one or more of blocks 1120J4A through 1120J4C.

At block 1120J4A, the method 1100 includes configuring the binary output of the human-perceptible recording status indicating model to be determined responsive to a detection of a presence of a person within a given viewing region of the camera based on the outputs of the plurality of sensors.

At block 1120J4B, the method 1100 includes configuring the binary output of the human-perceptible recording status indicating model to be determined responsive to a detection of an occurrence of a potential crime within a given viewing region of the camera based on the outputs of the plurality of sensors.

At block 1120J4C, the method 1100 includes configuring the binary output of the human-perceptible recording status indicating model to be determined responsive to a detection of an event from a plurality of potential events capable of occurring within a given viewing region of the camera based on the outputs of the plurality of sensors.

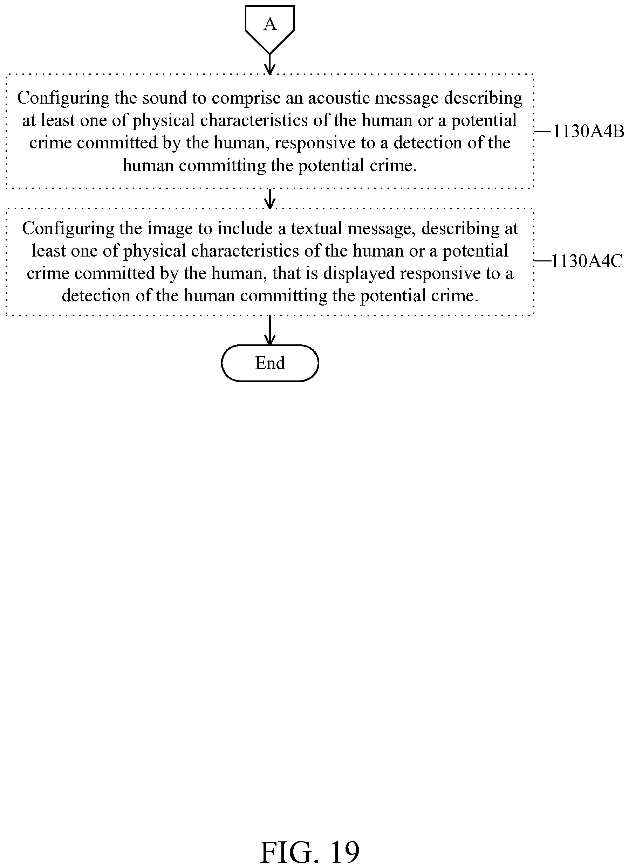

Referring to **FIG. 19****,** block 1130 may include block 1130A as shown in accordance with an exemplary aspect.

At block 1130A, the method 1100 includes producing at least one of a sound by a speaker and an image by a display device.

In an aspect, block 1130A may include one or more of blocks 1130A1 through 1130A4.

At block 1130A1, the method 1100 includes configuring the sound to at least one of precede and follow a displaying of a message on the display device specifying the human-perceptible recording status indication for the camera.

At block 1130A2, the method 1100 includes generating the sound by the speaker at a location of the display device, and configuring the display device to display the human-perceptible recording status indication for the camera in a form of a visual message while the sound is being generated.

At block 1130A3, the method 1100 includes configuring the image to include a message displayed on the display device specifying the human-perceptible recording status indication for the camera.

At block 1130A4, the method 1100 includes configuring the image to include one or more video frames of the human captured by the camera or another camera.

In an aspect, block 1130A4 may include blocks 1130A4A.

At block 1130A4A, the method 1100 includes configuring the one or more video frames of the human to be displayed responsive to a detection of a potential crime based on images captured by the camera that are compared to a database of crime pattern images. For example, images representative of theft, assault, and so forth may be stored for comparison to currently developing events being captured by one or more cameras.

At bock 1130A4B, the method 1100 includes configuring the sound to comprise an acoustic message describing at least one of physical characteristics of the human or a potential crime committed by the human, responsive to a detection of the human committing the potential crime.

At bock 1130A4C, the method 1100 includes configuring the image to include a textual message, describing at least one of physical characteristics of the human (e.g., height, hair color, clothing color, etc.) or a potential crime (e.g., assault, robbery, burglary, etc.) committed by the human, that is displayed responsive to a detection of the human committing the potential crime. See, e.g., **FIG. 7** and the corresponding description hereinbelow.

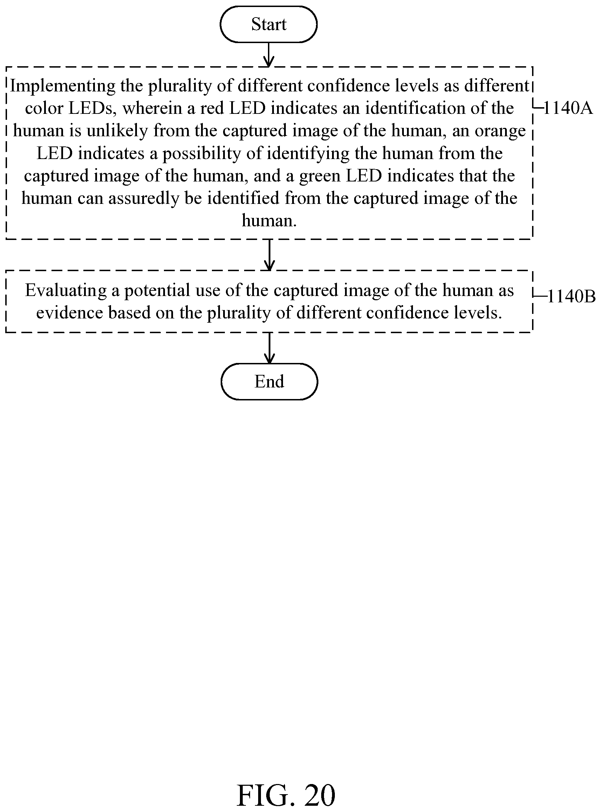

Referring to **FIG. 20****,** block 1140 may include one or more of blocks 1140A and 1140B as shown in accordance with an exemplary aspect

At block 1140A, the method 1100 includes implementing the plurality of different confidence levels as different color LEDs, wherein for four different criteria, each having its own contribution that can be weighted based on the implementation or simply 25 percent each, where a first color (e.g., red) LED indicates an identification of the human is unlikely from the captured image of the human corresponding to a 25 percent confidence value indicating one criterion has been met, a second color (e.g., orange) LED indicates a possibility of identifying the human from the captured image of the human corresponding to a 50 percent confidence value indicating two criteria has been met, a third color (e.g., yellow) LED indicates a more likely identification of the human from the captured image of the human corresponding a 75 percent confidence value indicating 3 criteria has been met and a fourth color (e.g., green) LED indicates that the human can assuredly be identified from the captured image of the human corresponding to a 100 percent confidence value indicating all four of the used criteria have been met. In another aspect corresponding to an example involving four different criteria being evaluated to determine the confidence value, a single beep every time period (e.g., 5, 10, 15, 30, 60 seconds, multiple thereof, and/or so forth) may indicate a 25 percent confidence value corresponding to 1 criteria having been met, while two beeps every time period may indicate a 50 percent confidence value corresponding to 2 criteria having been met, three beeps every time period may indicate a 75 percent confidence value corresponding to 3 criteria having been met, and four beeps every time period may indicate a 100 percent confidence value corresponding to all 4 criteria having been met. These and other audible and/or visual ways to indicate confidence may be used. In the above example, it should be understood that more or less confidence levels and/or criteria may be utilized, depending on how a user would like to implement the present system.

At block 1140B, the method 1100 includes evaluating a potential use of the captured image of the human as evidence based on the plurality of different confidence levels.

Additional aspects of the present disclosure may include one or more of the following clauses.

Clause 1. A computer-implemented method, comprising: determining a current recording status of a camera; and providing, in a vicinity of a human to the camera responsive to the current recording status of the camera, a human-perceptible recording status indication for the camera.

Clause 2. The computer-implemented method in accordance with clause 1, wherein providing the human-perceptible recording status indication for the camera uses existing hardware on the camera to provide the human-perceptible recording status indication for the camera.

Clause 3. The computer-implemented method in accordance with any preceding clause, wherein the existing hardware comprises one or more light emitting diodes.

Clause 4. The computer-implemented method in accordance with any preceding clause, wherein providing the human-perceptible recording status indication for the camera uses one or more separate devices from the camera to provide the human-perceptible recording status indication for the camera.

Clause 5. The computer-implemented method in accordance with any preceding clause, wherein the one or more separate devices comprise at least one of a display, a speaker, and a smart phone.

Clause 6. The computer-implemented method in accordance with any preceding clause, further comprising repurposing the one or more separate devices to provide the human-perceptible recording status indication for the camera in addition to other information.

Clause 7. The computer-implemented method in accordance with any preceding clause, wherein the human-perceptible recording status indication for the camera is provided using an output port of the camera driven by an on-board relay that selectively activates or deactivates one or more separate devices from the camera to provide the human-perceptible recording status indication for the camera.

Clause 8. The computer-implemented method in accordance with any preceding clause, further comprising generating a human-attention-directing output configured to direct an attention of a human to the human-perceptible recording status indication.

Clause 9. The computer-implemented method in accordance with any preceding clause, wherein generating the human-attention-directing output configured to direct the attention of the human to the human-perceptible recording status indication comprises producing at least one of a sound by a speaker and an image by a display device.

Clause 10. The computer-implemented method in accordance with any preceding clause, further comprising configuring the sound to at least one of precede and follow a displaying of a verbal message on the display device specifying the human-perceptible recording status indication for the camera.

Clause 11. The computer-implemented method in accordance with any preceding clause, further comprising: generating the sound by the speaker at a location of the display device; and configuring the display device to display the human-perceptible recording status indication for the camera in a form of a visual message while the sound is being generated.

Clause 12. The computer-implemented method in accordance with any preceding clause, further comprising configuring the image to comprise a message displayed on the display device specifying the human-perceptible recording status indication for the camera.

Clause 13. The computer-implemented method in accordance with any preceding clause, further comprising configuring the image to comprise one or more video frames of the human captured by the camera or another camera.

Clause 14. The computer-implemented method in accordance with any preceding clause, further comprising configuring the one or more video frames of the human to be displayed responsive to a detection of a potential crime based on images captured by the camera that are compared to a database of crime pattern images.

Clause 15. The computer-implemented method in accordance with any preceding clause, further comprising configuring the sound to comprise an acoustic message describing physical characteristics of the human, responsive to a detection of the human committing a potential crime.

Clause 16. The computer-implemented method in accordance with any preceding clause, further comprising configuring the image to comprise a textual message describing physical characteristics of the human that is displayed responsive to a detection of the human committing a potential crime.

Clause 17. The computer-implemented method in accordance with any preceding clause, further comprising transmitting the human-perceptible recording status indication for the camera to a computer device of a human when the human in within a proximity region of the camera.

Clause 18. The computer-implemented method in accordance with any preceding clause, wherein the human-perceptible recording status indication for the camera is provided to the human by an application on the smart phone of the human responsive to a signal indicative of the human-perceptible recording status indication.

Clause 19. The computer-implemented method in accordance with any preceding clause, wherein the application is selected from the group consisting of a scheduling application, a directory application, and a travel application.

Clause 20. The computer-implemented method in accordance with any preceding clause, wherein providing the human-perceptible recording status indication for the camera is performed responsive to a user input.

Clause 21. The computer-implemented method in accordance with any preceding clause, wherein providing the human-perceptible recording status indication for the camera is performed automatically responsive to a detection of an event.

Clause 22. The computer-implemented method in accordance with any preceding clause, wherein providing the human-perceptible recording status indication for the camera is performed automatically responsive to a detection of at least one of motion by a motion detector, sound by a microphone, weight by a weight sensor, and temperature rise by a thermometer.

Clause 23. The computer-implemented method in accordance with any preceding clause, wherein providing the human-perceptible recording status indication for the camera is performed responsive to outputs from a plurality of sensors.

Clause 24. The computer-implemented method in accordance with any preceding clause, further comprising performing sensor fusion of the outputs from the plurality of sensors to detect a trigger that causes the human-perceptible recording status indication for the camera to be provided.

Clause 25. The computer-implemented method in accordance with any preceding clause, further comprising configuring the trigger to cause the camera to selectively begin or cease recording.

Clause 26. The computer-implemented method in accordance with any preceding clause, further comprising comparing the outputs from the plurality of sensors to sensor patterns indicative of a plurality of triggers.

Clause 27. The computer-implemented method in accordance with any preceding clause, further comprising aggregating and storing the sensor patterns indicative of the plurality of triggers in a cloud computing system.

Clause 28. The computer-implemented method in accordance with any preceding clause, further comprising configuring the plurality of sensors to minimize a notification delay and a false alarm rate by providing the human-perceptible recording status indication for the camera at a moment a human enters a pre-configured range in which the human is expected to be able to perceive the human-perceptible recording status indication for the camera.

Clause 29. The computer-implemented method in accordance with any preceding clause, further comprising configuring the plurality of sensors minimize to a notification delay and a false alarm rate by providing the human-perceptible recording status indication for the camera at a moment a human opens a doorway responsive to an expected trajectory of the human that intersects the doorway.

Clause 30. The computer-implemented method in accordance with any preceding clause, further comprising configuring a human-perceptible recording status indicating model to receive the outputs from the plurality of sensors and provide the human-perceptible recording status indication as a binary output representative of recording or not recording by the camera.

Clause 31. The computer-implemented method in accordance with any preceding clause, further comprising configuring the binary output of the human-perceptible recording status indicating model to be determined responsive to a detection of a presence of a person within a given viewing region of the camera based on the outputs of the plurality of sensors.

Clause 32. The computer-implemented method in accordance with any preceding clause, further comprising configuring the binary output of the human-perceptible recording status indicating model to be determined responsive to a detection of an occurrence of a potential crime within a given viewing region of the camera based on the outputs of the plurality of sensors.

Clause 33. The computer-implemented method in accordance with any preceding clause, further comprising configuring the binary output of the human-perceptible recording status indicating model to be determined responsive to a detection of an event from a plurality of potential events capable of occurring within a given viewing region of the camera based on the outputs of the plurality of sensors.

Clause 34. The computer-implemented method in accordance with any preceding clause, further comprising: detecting an occurrence of a trigger event and initiating recording by the camera along with providing the human-perceptible recording status indication for the camera; and evaluating a captured image of a human against a set of identification quality criteria to provide a confidence level indication from among a plurality of different confidence levels for the captured image of the human in identifying the human.

Clause 35. The computer-implemented method in accordance with any preceding clause, further comprising implementing the plurality of different confidence levels as different color LEDs, wherein a first color (e.g., red) LED indicates an identification of the human is unlikely from the captured image of the human, a second color (e.g., orange) LED indicates a possibility of identifying the human from the captured image of the human, and a third color (e.g., green) LED indicates that the human can assuredly be identified from the captured image of the human.

Clause 36. The computer-implemented method in accordance with any preceding clause, further comprising evaluating a potential use of the captured image of a human as evidence based on the plurality of different confidence levels.

Clause 37. The computer-implemented method in accordance with any preceding clause, wherein the camera has a type selected from the group consisting of a closed circuit television camera, a body-worn camera, a fixed camera, a stationary camera, and a doorbell camera.

Clause 38. The computer-implemented method in accordance with any preceding clause, wherein the camera is a body-worn camera, and the human-perceptible recording status indication for the camera is provided on a forward facing body-worn display operatively coupled to the camera.

Clause 39. A computer program product configured to indicate a recording status of a camera, the computer program product comprising one or more non-transitory computer-readable media, having instructions stored thereon that when executed by one or more processors cause the one or more processors, individually or in combination, to perform a method comprising: determining a current recording status of the camera; and providing, in a vicinity of a human to the camera responsive to the current recording status of the camera, a human-perceptible recording status indication for the camera.

Clause 40. The computer program product of clause 39, wherein the instructions when executed by one or more processors are further configured to cause the one or more processors, individually or in combination, to perform the method of any one or any combination of clauses 2 to 38.

Clause 41. A system configured to indicate a recording status of a camera, comprising: one or more memory devices having program code stored thereon, one or more processors, operatively coupled to the one or more memory devices, for running the program code, individually or in combination, to: determine a current recording status of the camera; and provide, in a vicinity of a human to the camera responsive to the current recording status of the camera, a human-perceptible recording status indication for the camera.

Clause 42. The system in accordance with clause 41, wherein at least some of the one or more memory devices and the one or more processors are comprised in the camera.

Clause 43. The system in accordance with any preceding clause, wherein at least some of the one or more memory devices and the one or more processors are comprised in a computer processing system configured to control at least the camera.

Clause 44. The system in accordance with any preceding clause, wherein the human-perceptible recording status indication for the camera is provided uses existing hardware on the camera to provide the human-perceptible recording status indication for the camera.

Clause 45. The system in accordance with any preceding clause, wherein the system is at least partially comprised in the camera, and wherein the existing hardware on the camera comprises one or more light emitting diodes.

Clause 46. The system in accordance with any preceding clause, further comprising one or more separate devices from the camera configured to provide the human-perceptible recording status indication for the camera.

Clause 47. The system in accordance with any preceding clause, wherein the one or more separate devices comprise at least one of a display, a speaker, and a smart phone.

Clause 48. The system in accordance with any preceding clause, wherein the one or more separate devices are repurposed to provide the human-perceptible recording status indication for the camera in addition to other information.

Clause 49. The system in accordance with any preceding clause, wherein the system is at least partially comprised in the camera and further comprises an output port of the camera driven by an on-board relay that selectively activates or deactivates one or more separate devices from the camera.

Clause 50. The system in accordance with any preceding clause, wherein the one or more processors, further run the program code, individually or in combination, to generate a human-attention-directing output configured to direct an attention of a human to the human-perceptible recording status indication.

Clause 51. The system in accordance with any preceding clause, wherein the one or more processors, further run the program code, individually or in combination, to cause a producing of at least one of a sound by a speaker and an image by a display device.

Clause 52. The system in accordance with any preceding clause, wherein the sound is produced to at least one of precede and follow a displaying of a message on the display device specifying the human-perceptible recording status indication for the camera.

Clause 53. The system in accordance with any preceding clause, wherein the speaker is configured to generate sound at a location of the display device, and wherein the display device is configured to display the human-perceptible recording status indication for the camera in a form of a visual message while the sound is being generated.

Clause 54. The system in accordance with any preceding clause, wherein the one or more processors, further run the program code, individually or in combination, to configure the image displayed on the display device to comprise a textual message specifying the human-perceptible recording status indication for the camera.

Clause 55. The system in accordance with any preceding clause, wherein the one or more processors, further run the program code, individually or in combination, to configure the image to comprise one or more video frames of the human captured by the camera or another camera.

Clause 56. The system in accordance with any preceding clause, wherein the one or more processors, further run the program code, individually or in combination, to configuring the one or more video frames of the human to be displayed responsive to a detection of a potential crime based on images captured by the camera that are compared to a database of crime pattern images.

Clause 57. The system in accordance with any preceding clause, wherein the one or more processors, further run the program code, individually or in combination, to configure the sound to comprise an acoustic message describing physical characteristics of the human, responsive to a detection of the human committing a potential crime.

Clause 58. The system in accordance with any preceding clause, wherein the one or more processors, further run the program code, individually or in combination, to configuring the image to comprise a textual message describing physical characteristics of the human that is displayed responsive to a detection of the human committing a potential crime.

Clause 59. The system in accordance with any preceding clause, wherein the human-perceptible recording status indication for the camera is transmitted to a computer device phone of a human when the human in within a proximity region of the camera.

Clause 60. The system in accordance with any preceding clause, wherein the human-perceptible recording status indication for the camera is provided to the human by an application on the smart phone of the human responsive to a signal indicative of the human-perceptible recording status indication.

Clause 61. The system in accordance with any preceding clause, wherein the application is selected from the group consisting of a scheduling application, a directory application, and a travel application.

Clause 62. The system in accordance with any preceding clause, wherein the human-perceptible recording status indication for the camera is provided responsive to a user input.

Clause 63. The system in accordance with any preceding clause, wherein the human-perceptible recording status indication for the camera is provided automatically responsive to a detection of an event.

Clause 64. The system in accordance with any preceding clause, wherein the human-perceptible recording status indication for the camera is provided automatically responsive to a detection of at least one of motion by a motion detector, sound by a microphone, weight by a weight sensor, and temperature rise by a thermometer.

Clause 65. The system in accordance with any preceding clause, wherein the human-perceptible recording status indication for the camera is provided responsive to outputs from a plurality of sensors.

Clause 66. The system in accordance with any preceding clause, wherein the one or more processors, further run the program code, individually or in combination, to perform sensor fusion of the outputs from the plurality of sensors to detect a trigger that causes the human-perceptible recording status indication for the camera to be provided.

Clause 67. The system in accordance with any preceding clause, wherein the one or more processors, further run the program code, individually or in combination, to cause the camera to selectively begin or cease recording responsive to a detection of the trigger.

Clause 68. The system in accordance with any preceding clause, wherein the one or more processors, further run the program code, individually or in combination, to cause the camera to selectively begin or cease recording responsive to a detection of the trigger.

Clause 69. The system in accordance with any preceding clause, wherein the one or more processors, further run the program code, individually or in combination, to aggregate and store sensor patterns indicative of a plurality of triggers in a cloud computing system.

Clause 70. The system in accordance with any preceding clause, wherein the one or more processors, further run the program code, individually or in combination, to configure the plurality of sensors to minimize a notification delay and a false alarm rate by providing the human-perceptible recording status indication for the camera at a moment a human enters a pre-configured range in which the human is expected to be able to perceive the human-perceptible recording status indication for the camera.

Clause 71. The system in accordance with any preceding clause, wherein the one or more processors, further run the program code, individually or in combination, to configure the plurality of sensors minimize to a notification delay and a false alarm rate by providing the human-perceptible recording status indication for the camera at a moment a human opens a doorway responsive to an expected trajectory of the human that intersects the doorway.

Clause 72. The system in accordance with any preceding clause, wherein the one or more processors, further run the program code, individually or in combination, to provide the outputs from the plurality of sensors to a human-perceptible recording status indicating model, and receive the human-perceptible recording status indication as a binary output of the human-perceptible recording status indicating model that is representative of recording or not recording by the camera.

Clause 73. The system in accordance with any preceding clause, wherein the binary output of the human-perceptible recording status indicating model is determined responsive to a detection of a presence of a person within a given viewing region of the camera that is based on the outputs of the plurality of sensors.

Clause 74. The system in accordance with any preceding clause, wherein the binary output of the human-perceptible recording status indicating model is determined responsive to a detection of an occurrence of a potential crime within a given viewing region of the camera that is based on the outputs of the plurality of sensors.

Clause 75. The system in accordance with any preceding clause, wherein the binary output of the human-perceptible recording status indicating model is determined responsive to a detection of an event from a plurality of potential events capable of occurring within a given viewing region of the camera based on the outputs of the plurality of sensors.

Clause 76. The system in accordance with any preceding clause, wherein the one or more processors, further run the program code, individually or in combination, to:
detect an occurrence of a trigger event and initiate recording by the camera along with providing the human-perceptible recording status indication for the camera; and evaluate a captured image of the human against a set of identification quality criteria to provide a confidence level indication from among a plurality of different confidence levels for the captured image of the human in identifying the human

Clause 77. The system in accordance with any preceding clause, further comprising different color light emitting diodes (LEDs) for implementing the plurality of different confidence levels, wherein a first color (e.g., red) LED indicates an identification of the human is unlikely from the captured image of the human, a second color (e.g., orange) LED indicates a possibility of identifying the human from the captured image of the human, and a third color (e.g., green) LED indicates that the human can assuredly be identified from the captured image of the human.

Clause 78. The system in accordance with any preceding clause, wherein the one or more processors, further run the program code, individually or in combination, to evaluate a potential use of the captured image of the human as evidence based on the plurality of different confidence levels.

Clause 79. The system in accordance with any preceding clause, wherein the camera has a type selected from the group consisting of a closed circuit television camera, a body-worn camera, a fixed camera, a stationary camera, and a doorbell camera.

Clause 80. The system in accordance with any preceding clause, wherein the camera is a body-worn camera, and the human-perceptible recording status indication for the camera is provided on a forward facing body-worn display operatively coupled to the camera.

Various aspects of the disclosure may take the form of an entirely or partially hardware aspect, an entirely or partially software aspect, or a combination of software and hardware. Furthermore, as described herein, various aspects of the disclosure (e.g., systems and methods) may take the form of a computer program product comprising a computer-readable non-transitory storage medium having computer-accessible instructions (e.g., computer-readable and/or computer-executable instructions) such as computer software, encoded or otherwise embodied in such storage medium. Those instructions can be read or otherwise accessed and executed by one or more processors to perform or permit the performance of the operations described herein. The instructions can be provided in any suitable form, such as source code, compiled code, interpreted code, executable code, static code, dynamic code, assembler code, combinations of the foregoing, and the like. Any suitable computer-readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read-only memory (ROM); random access memory (RAM); magnetic disk storage media; optical storage media; flash memory, and so forth.

Aspects of this disclosure are described herein with reference to block diagrams and flowchart illustrations of methods, systems, apparatuses, and computer program products. It can be understood that each block of the block diagrams and flowchart illustrations, and combinations of blocks in the block diagrams and flowchart illustrations, respectively, can be implemented by computer-accessible instructions. In certain implementations, the computer-accessible instructions may be loaded or otherwise incorporated into a general-purpose computer, a special-purpose computer, or another programmable information processing apparatus to produce a particular machine, such that the operations or functions specified in the flowchart block or blocks can be implemented in response to execution at the computer or processing apparatus.

Unless otherwise expressly stated, it is in no way intended that any protocol, procedure, process, or method set forth herein be construed as requiring that its acts or steps be performed in a specific order. Accordingly, where a process or method claim does not actually recite an order to be followed by its acts or steps, or it is not otherwise specifically recited in the claims or descriptions of the subject disclosure that the steps are to be limited to a specific order, it is in no way intended that an order be inferred, in any respect. This holds for any possible non-express basis for interpretation, including: matters of logic with respect to the arrangement of steps or operational flow; plain meaning derived from grammatical organization or punctuation; the number or type of aspects described in the specification or annexed drawings; or the like.

As used in this disclosure, including the annexed drawings, the terms "component," "module," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. As yet another example, a component can be an apparatus that provides specific functionality through electronic components without mechanical parts, the electronic components can include a processor to execute program code that provides, at least partially, the functionality of the electronic components. As still another example, interface(s) can include I/O components or Application Programming Interface (API) components. While the foregoing examples are directed to aspects of a component, the exemplified aspects or features also apply to a system, module, and similar.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" and "e.g." are utilized herein to mean serving as an instance or illustration. Any aspect or design described herein as an "example" or referred to in connection with a "such as" clause or "e.g." is not necessarily to be construed as preferred or advantageous over other aspects or designs described herein. Rather, use of the terms "example" or "such as" or "e.g." is intended to present concepts in a concrete fashion. The terms "first," "second," "third," and so forth, as used in the claims and description, unless otherwise clear by context, is for clarity only and does not necessarily indicate or imply any order in time or space.

The term "processor," as utilized in this disclosure, can refer to any computing processing unit or device comprising processing circuitry that can operate on data and/or signaling. A computing processing unit or device can include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. In some cases, processors can exploit nano-scale architectures, such as molecular and quantum-dot based transistors, switches and gates, in order to optimize space usage or enhance performance of user equipment. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

Various aspects described herein can be implemented as a method, apparatus, or article of manufacture using special programming as described herein. In addition, various of the aspects disclosed herein also can be implemented by means of program modules or other types of computer program instructions specially configured as described herein and stored in a memory device and executed individually or in combination by one or more processors, or other combination of hardware and software, or hardware and firmware. Such specially configured program modules or computer program instructions, as described herein, can be loaded onto a general-purpose computer, a special-purpose computer, or another type of programmable data processing apparatus to produce a machine, such that the instructions which execute on the computer or other programmable data processing apparatus create a means for implementing the functionality of disclosed herein.

The term "article of manufacture" as used herein is intended to encompass a computer program accessible from any non-transitory computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

The detailed description set forth herein in connection with the annexed figures is intended as a description of various configurations or implementations and is not intended to represent the only configurations or implementations in which the concepts described herein may be practiced. The detailed description includes specific details for the purpose of providing a thorough understanding of various concepts. However, it will be apparent to those skilled in the art that these concepts may be practiced without these specific details or with variations of these specific details. In some instances, well-known components are shown in block diagram form, while some blocks may be representative of one or more well-known components.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

## Claims

1. A computer-implemented method, comprising:
determining a current recording status of a camera; and
providing, in a vicinity of the camera responsive to the current recording status of the camera, a human-perceptible recording status indication for the camera.

2. The computer-implemented method in accordance with claim 1, wherein providing the human-perceptible recording status indication for the camera uses hardware on the camera to provide the human-perceptible recording status indication for the camera.

3. The computer-implemented method in accordance with claim 1 or 2, wherein providing the human-perceptible recording status indication for the camera uses one or more separate devices from the camera to provide the human-perceptible recording status indication for the camera.

4. The computer-implemented method in accordance with any of claims 1 to 3, wherein the human-perceptible recording status indication for the camera is provided using an output port of the camera driven by an on-board relay that selectively activates or deactivates one or more separate devices from the camera.

5. The computer-implemented method in accordance with any of claims 1 to 4, further comprising generating a human-attention-directing output configured to direct an attention of a human to the human-perceptible recording status indication.

6. The computer-implemented method in accordance with any of claims 1 to 5, further comprising transmitting the human-perceptible recording status indication for the camera to a computer device of a human when the human in within a proximity region of the camera.

7. The computer-implemented method in accordance with any of claims 1 to 6, wherein providing the human-perceptible recording status indication for the camera is performed responsive to at least one of a user input or a detection of an event or a detection of at least one of motion by a motion detector, sound by a microphone, weight by a weight sensor, or temperature rise by a thermometer.

8. A computer program product configured to indicate a recording status of a camera, the computer program product comprising one or more non-transitory computer-readable media, having instructions stored thereon that when executed by one or more processors cause the one or more processors, individually or in combination, to perform a method comprising:
determining a current recording status of the camera; and
providing, in a vicinity of a human to the camera responsive to the current recording status of the camera, a human-perceptible recording status indication for the camera.

9. A system for indicating a recording status of a camera, comprising:
one or more memory devices having program code stored thereon, one or more processors, operatively coupled to the one or more memory devices, for running the program code, individually or in combination, to:
determine a current recording status of the camera; and
provide, in a vicinity of the camera responsive to the current recording status of the camera, a human-perceptible recording status indication for the camera.

10. The system in accordance with claim 9, wherein at least some of the one or more memory devices and the one or more processors are comprised in the camera.

11. The system in accordance with claim 9 or 10, wherein at least some of the one or more memory devices and the one or more processors are comprised in a computer processing system configured to control at least the camera.

12. The system in accordance with any of claims 9 to 11, wherein the human-perceptible recording status indication for the camera is provided uses existing hardware on the camera to provide the human-perceptible recording status indication for the camera.

13. The system in accordance with any of claims 9 to 12, further comprising one or more separate devices from the camera configured to provide the human-perceptible recording status indication for the camera.

14. The system in accordance with any of claims 9 to 13, wherein the system is at least partially comprised in the camera and further comprises an output port of the camera driven by an on-board relay that selectively activates or deactivates one or more separate devices from the camera.

15. The system in accordance with any of claims 9 to 14, wherein the one or more processors, further run the program code, individually or in combination, to direct an attention of a human to the human-perceptible recording status indication for the camera.
